(19) Europäisches Patentamt
European Patent Office
Office européen des brevets

(11) EP 4 636 010 A1

(12) **EUROPEAN PATENT APPLICATION**

(43) Date of publication:
**22.10.2025 Bulletin 2025/43**

(21) Application number: **24171055.7**

(22) Date of filing: **18.04.2024**

(51) International Patent Classification (IPC):
***C08G 71/04*** *(2006.01)* ***C08J 9/02*** *(2006.01)*
***C08J 9/08*** *(2006.01)* ***C08J 11/04*** *(2006.01)*
***C08K 3/22*** *(2006.01)* ***C08K 3/26*** *(2006.01)*
*C08G 101/00 (2006.01)*

(52) Cooperative Patent Classification (CPC):
(C-Sets available)
**C08G 71/04; C08J 9/02; C08J 9/08; C08J 11/04;**
C08G 2101/00; C08G 2110/0058; C08G 2110/0066;
C08J 2375/04; C08K 2003/2217; C08K 2003/2224;
C08K 2003/267 (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Université de Liège**
**4000 Liège (BE)**

(72) Inventors:
- **BOURGUIGNON, Maxime**
  **4000 Liège (BE)**
- **MAKAROV, Maksim**
  **4000 Liège (BE)**
- **DETREMBLEUR, Christophe**
  **4000 Liège (BE)**
- **GRIGNARD, Bruno**
  **4000 Liège (BE)**

(74) Representative: **V.O.**
**P.O. Box 87930**
**2508 DH Den Haag (NL)**

(54) **IMPROVED COMPOSITIONS FOR SELF-BLOWING NON-ISOCYANATE POLYURETHANE FOAMS**

(57) A curable isocyanate-free formulation for preparing a polyurethane self-blowing foam, said formulation comprising:
- at least one multifunctional amine (compound B),
- water as such or/and a water source,
- at least one activated cyclic carbonate having at least one cyclic carbonate group which is selected from an exo-vinylene cyclic carbonate or an endo-vinylene cyclic carbonate (compound J),
- optionally at least one multifunctional cyclic carbonate having at least two terminal cyclic carbonate groups (compound A),
- optionally at least one catalyst (compound D),
- optionally an epoxide compound (compound I),
- optionally a filler,

wherein water as such and/or water source is present in the formulation in such amounts that the molar ratio of total amount of water including water provided by the water source to cyclic carbonate groups from compound J and/or compound A is between 0.025 and 8.0, preferably between 0.05 and 5.0, more preferably between 0.1 and 4.0, even more preferably between 0.25 and 2.0, and wherein compound A is optional in case compound J is a multifunctional activated cyclic carbonate comprising at least two terminal cyclic carbonate groups.

EP 4 636 010 A1

(52) Cooperative Patent Classification (CPC): (Cont.)

C-Sets
**C08K 3/22, C08L 75/04;**
**C08K 3/26, C08L 75/04**

## Description

### TECHNICAL FIELD OF THE INVENTION

The present invention relates to a method for producing self-blowing isocyanate-free polyurethanes foams from reactive curable isocyanate-free polyurethane formulations, the products formed thereof and the formulations for use in said process. The present invention also relates to the process for recycling said foams and the products thereof.

### BACKGROUND OF THE INVENTION

Polyurethanes (PUs) are employed in a wide range of applications, notably in the form of foams. Depending on their composition, polyurethane foams can vary in structure from soft flexible foams to rigid foams used in insulation or structural materials.

Gasket/foams in place applications (or sprayable foams), foam molding or reactive extrusion-foaming are some of the most common industrial processes for polyurethane (PU) foams production. These processes share conceptual similarities as a reactive/curable viscous isocyanate-derived PU formulation is foamed by in-situ generation of $CO_2$ as a blowing agent to give access to a very large scope of applications. This $CO_2$ is generated by the hydrolysis of isocyanates (thus by the addition of water to the formulation).

Polyurethane foams derived from polyisocyanates are associated with environmental issues because isocyanate raw materials are classified as toxic.

Therefore, there is a need to develop greener and safer ways to produce sustainable PUs which are not derived from polyisocyanates. The synthesis of non-isocyanate polyurethanes (NIPUs) by copolymerization of a bicyclic carbonate monomer and a diamine represents one of the most promising alternatives to the conventional synthesis of PUs.

For emerging isocyanate-free polyurethanes (NIPU) made from polycyclic carbonates and polyamines, recent breakthrough by Detrembleur et al. have enabled the in-situ generation of $CO_2$ as blowing agent by adding water to the reactive formulation (WO 2023/104362 A1). It was shown that cyclic carbonates moieties are prone to hydrolysis, releasing in-situ $CO_2$ as blowing agent.

In J. Am. Chem. Soc. 2024, 146, 1, 988-1000, the same authors also disclosed the addition of some epoxides in partial replacement of the cyclic carbonates to enable the foaming at room temperature. However, the so-produced foam is a hybrid material between epoxy and NIPU resins, thus with amino-alcohol and hydroxyurethane linkages and is thus not a pure NIPU. Moreover, some epoxides are also toxic compounds and their use could be limited.

There is therefore still a need for compositions which solve one or more of the above problems, in particular to obtain $CO_2$ self-blown NIPU foams in short reaction times and without the need for external heating.

The present invention therefore seeks to provide an improved self-blowing formulation to prepare NIPU foams of varying density and good foam quality not showing the disadvantages of the prior art mentioned above, in particular a formulation with low-cost and non-toxic reagents, allowing control of the generation of the blowing agent. The present invention further seeks to provide a simple process to prepare NIPU foams from said self-blowing formulations that is easy to implement on an industrial scale with low cost products and that can be easily reprocessed.

### DESCRIPTION OF THE INVENTION

Surprisingly, we have now shown that the addition of cyclic carbonates having at least one cyclic carbonate group selected from an exo-vinylene cyclic carbonate or an endo-vinylene cyclic carbonate (referred to in this application as "activated cyclic carbonates" or "compound J") to a state of the art reactive curable isocyanate-free polyurethane formulations containing conventional cyclic carbonates and multifunctional amines to provide self-blowing non-isocyanate polyurethane foams (see reaction scheme 1 below) will solve the above mentioned limitations and further improve the preparation of high performance foams in an industrially relevant manner.

An advantage of the reactive curable isocyanate-free polyurethane formulations of the present invention is that the hydrolysis of the cyclic carbonates, and thus the foaming, does not need the addition of external heat and the curing/foaming may be performed at room temperature. It was surprisingly found that the addition of cyclic carbonates having at least one cyclic carbonate group selected from an exo-vinylene cyclic carbonate or an endo-vinylene cyclic carbonate to a state of the art reactive curable isocyanate-free polyurethane formulations gives rise to high and exothermic reactivity with amines, thereby providing sufficient heat to reach the NIPU foaming zone of 75-100°C without addition of external heat (see reaction scheme 2 below). At this temperature, the in-situ release of the blowing agent ($CO_2$) is guaranteed by the partial hydrolysis of conventional cyclic carbonates (upon controlled water addition), which promotes the foam expansion. Besides, any remaining conventional cyclic carbonates may participate to the NIPU network formation by reacting with amines (formation of hydroxyurethane linkages).

The activated cyclic carbonates (compound J) having exo-vinylene cyclic carbonate groups can participate to the construction of the NIPU network by forming oxazolidone moieties (or in other words cyclic urethanes moieties) via a 100% atom reaction with amines while the activated cyclic carbonates having an endo-vinylene cyclic carbonate group can generate urethane linkages bearing aldehyde or ketone groups, depending on the structure. As a consequence, the final expanded material is a pure isocyanate-free polyurethane foam.

Moreover, it was surprisingly seen that the activated cyclic carbonates (compound J) according to the invention are more reactive than the conventional cyclic carbonates used in the state of the art reactive curable isocyanate-free polyurethane formulations.

One further advantage of the addition of the activated cyclic carbonates having at least one cyclic carbonate group selected from an exo-vinylene cyclic carbonate or an endo-vinylene cyclic carbonate (compound J) is that the reaction enabling to form the NIPU chains is very quick (the foam expansion occurs in few seconds to less than 10 min) and will occur simultaneously with the hydrolysis of the cyclic carbonate that releases the foaming agent (carbon dioxide).

A further advantage is that all components can be mixed together to obtain a formulation of appropriate viscosity. As the reaction rates of aminolysis and hydrolysis for the conventional cyclic carbonates (compound A) versus the activated cyclic carbonates (compound J) are different and may depend on the type of catalyst when used and/or the further addition of epoxide compounds, the aminolysis can be promoted prior to hydrolysis in order to increase the formulation viscosity. The use of water or/and a water source may as well further control the viscosity of the formulation. Controlling the viscosity of the reactive curable isocyanate-free polyurethane formulations is generally an important parameter to allow for different applications as detailed hereafter.

As another important advantage compared to prior art formulations, the use of an external catalyst is not always needed. Indeed, the multifunctional amine present in the formulation as a co-monomer can also play the role of an intrinsic catalyst. The addition of a catalyst may however further accelerate the foaming.

A further advantage of the reactive curable isocyanate-free polyurethane formulations according to the invention is that no volatile organic compounds will be released during foaming and/or curing as no solvents are present in the reactive curable isocyanate-free polyurethane formulation of the invention.

Yet another important advantage is that the use of the reactive curable isocyanate-free polyurethane formulations according to the invention are compatible with existing fabrication processes used for conventional PU foaming and all state of the art foaming processes and equipment can be used thereby covering fabrication of all existing polyurethane products (foams). The reactive curable isocyanate-free polyurethane formulations according to the invention is compatible with continuous reactive extrusion-foaming processes and equipment (used for making insulation (sandwich) panels) as well as with reactive injection-molding processes and equipment (used for example for making mattresses, seats, cushioning,...).

According to one aspect of the present invention an improved curable isocyanate-free formulation for preparing a polyurethane self-blowing foam is provided, said formulation comprising:

- at least one multifunctional amine (compound B),
- water as such or/and a water source,
- at least one activated cyclic carbonate having at least one cyclic carbonate group which is selected from an exo-vinylene cyclic carbonate or an endo-vinylene cyclic carbonate (compound J),
- optionally at least one multifunctional cyclic carbonate having at least two terminal cyclic carbonate groups (compound A),
- optionally at least one catalyst (compound D),
- optionally an epoxide compound (compound I),
- optionally a filler,

wherein water as such and/or water source is present in the formulation in such amounts that the molar ratio of total water including the water provided by the water source to cyclic carbonate groups from compound J and/or compound A is between 0.025 and 8.0, preferably between 0.05 and 5.0, more preferably between 0.1 and 4.0, even more preferably between 0.25 and 2.0, and

wherein compound A is optional in case compound J is a multifunctional activated cyclic carbonate comprising at least two terminal cyclic carbonate groups.

According to another aspect of the present invention a process for preparing a polyurethane self-blowing foam is provided comprising the steps of providing said formulation and curing it so as to promote the formation of $CO_2$ and form a non-isocyanate polyurethane foam.

According to yet another aspect of the present invention a non-isocyanate polyurethane foam is provided by said process using said formulation.

According to yet another aspect of the present invention a process for recycling said polyurethane foam by

compression molding or extrusion is provided.

According to yet another aspect of the present invention a recycled polyurethane foam processed as film, coating, adhesive, fiber or as bulk material is provided.

It is known that cyclic carbonates undergo decarboxylation upon addition of water and/or a water source optionally in the presence of an appropriate catalyst, typically an (organo)base, thereby generating in-situ the blowing agent leading to the formation of NIPU foams (see reaction scheme 1).

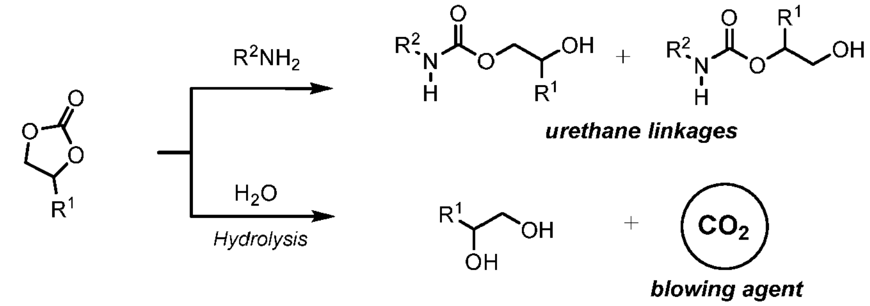


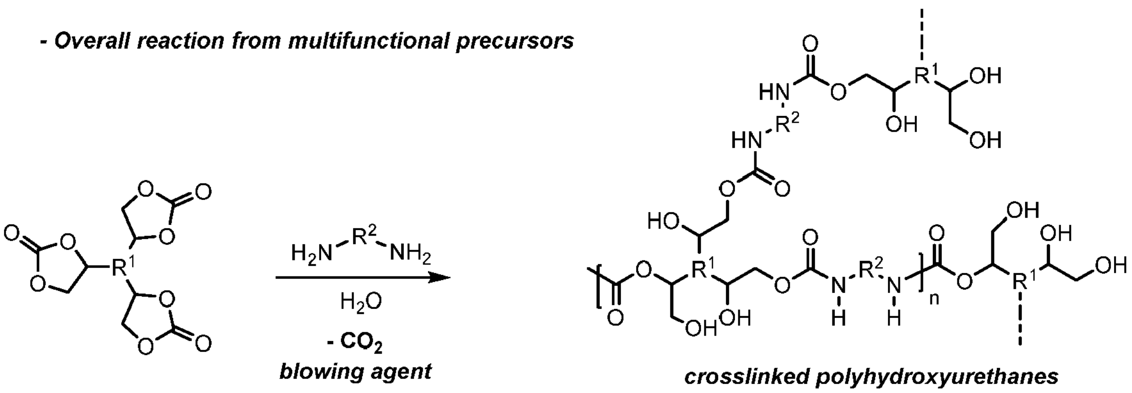


Reaction scheme 1: illustration of the aminolysis and hydrolysis of the cyclic carbonate, and the overall simplified reaction scheme for the formation of self-blowing NIPU foams from a mixture of a tricyclic carbonate, diamine and water.

Above self-blowing reaction scheme 1 is however only possible when the formulation is pre-heated and the foaming itself is still slower than the conventional foaming process for PU. Typically the formation of NIPU polymers according to reaction scheme 1 occurs simultaneously with the hydrolysis and decarboxylation of the cyclic carbonate, promoting the expansion of the material upon heating generally within 1 min (at high temperature such as 160°C) up to 24h (at lower temperatures, typically in the range 60°C up to 120°C). The hydrolysis of the cyclic carbonate generates 1,2-diols within the NIPU structure and its aminolysis generates hydroxyurethane links. One also refers here to polyhydroxyurethane (PHU).

It was observed that the exo- and endo-vinylene cyclic carbonates are more reactive than traditional five-membered cyclic carbonates used in the formulation. Below reaction scheme 2a illustrates the reaction of exo-vinylene cyclic carbonates with the amines wherein the exo-vinylene cyclic carbonate is first ring-opened by the amine, leading to oxo-urethane that spontaneously cyclizes into the oxazolidone thereby introducing oxazolidone moieties (i.e. cyclic urethanes moieties). Depending on the steric hindrance of the amine and exo-vinylene-cyclic carbonate, a mixture of the two structures can be obtained, which may affect the properties of the foam in the end. The reaction of the exo-vinylene cyclic carbonates with the amines will then provide a reaction exotherm sufficient for hydrolysis and decarboxylation of the traditional cyclic carbonates leading to the in-situ release of the blowing agent ($CO_2$) and hence foam expansion. Simplified structure of the so-produced foam is illustrated in Scheme 2b.

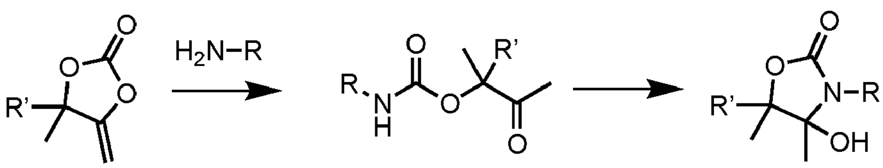

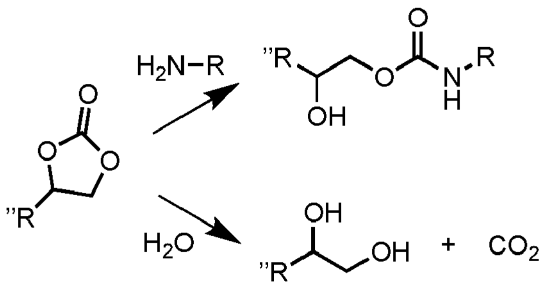


Reaction scheme 2a: illustration of the reaction of exo-vinylene cyclic carbonates with (primary) amines thereby introducing oxazolidone moieties, and of cyclic carbonates with amines to provide hydroxyurethane moieties and with water to provide the blowing agent ($CO_2$) and vicinal diols.

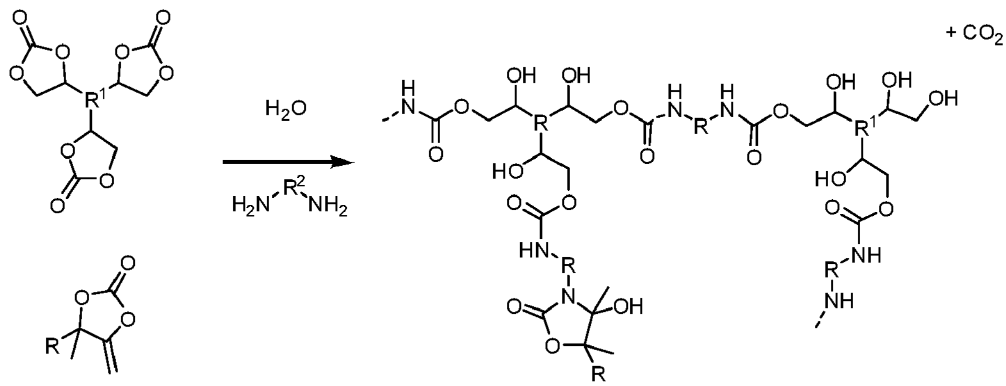


Reaction scheme 2b: illustration of the reaction scheme for the formation of the foam in the presence of exo-vinylene cyclic carbonate in the formulation, with the simplified structure of the polymer foam.

The addition of exo- and/or endo-vinylene cyclic carbonates according to the invention in combination with conventional state of the art poly(cyclic carbonate)s, suitable polyamines and sufficient amount of water (or water source) will result in a reactive formulation with low viscosity at room temperature. The foam expansion will occur in a few seconds to less than 10 min in said reactive formulation making said formulation very attractive and compatible with industrial needs and transferable to operational plants. The reactive formulation according to the invention can be regarded as a perfect isocyanate-free alternative to conventional PU foams produced by adding water to isocyanate/polyol formulations.

Advantageously, the curable formulation of the invention is a liquid or a viscous liquid at ambient temperature (25°C). Preferably, the viscosity of said curable formulation is lower than or equal to 20 000 mPa.s at 50°C, more preferably lower than 10 000 mPa.s at 50°C, most preferably lower than 5 000 mPa.s at 50°C as measured with an oscillatory rheometer, with oscillatory frequency sweep at room temperature or at a temperature of from room temperature to for example 50°C, 5% deformation, 100-0.1 rad $s^{-1}$. The viscosity of the starting formulation can be adjusted by the choice and content of the reagents and/or additives such as plasticizers, reactive diluents or fillers for example. It will be known by the skilled person that a molecule with a lower molar mass will lead to a lower viscosity and vice-versa. Controlling the viscosity of the formulation is generally an important parameter to allow the easy deposition of the formulation onto various substrates without using organic solvents. The NIPU formulation may be applied by any suitable means. Examples include the deposition with syringes, through pistols or injectors, through continuous processes, through reactive molding or reactive foaming, by spraying means, through extruders.

DESCRIPTION OF EMBODIMENTS

Terminology used for describing particular embodiments is not intended to be limiting of the invention. As used herein, the singular forms "a", "an" and "the" are intended to include the plural forms as well, unless the context clearly indicates otherwise. The term "and/or" includes any and all combinations of one or more of the associated listed items. It will be understood that the terms "comprises" and/or "comprising" specify the presence of stated features but do not preclude the presence or addition of one or more other features. It will be further understood that when a particular step of a method is referred to as subsequent to another step, it can directly follow said other step or one or more intermediate steps may be carried out before carrying out the particular step, unless specified otherwise.

The present invention will be described with respect to particular embodiments and with reference to certain drawings but the invention is not limited thereto but only by the claims.

The terms **"about"** or **"approximate"** and the like are synonymous and are used to indicate that the value modified by the term has an understood range associated with it, where the range can be +20%, +15%, +10%, +5%, or +1%. The term "substantially" is used to indicate that a result (e.g., measurement value) is close to a targeted value, where close can mean, for example, the result is within 80% of the value, within 90% of the value, within 95% of the value, or within 99% of the value.

As used herein, the term **"wt%",** or **"weight percentage",** or **"percentage by weight",** refers to the mass fraction of a compound in a mixture, composition or formulation divided by the total mass of said mixture, composition or formulation multiplied by 100 and is expressed as a percentage between 0 and 100.

As used herein the term **"room temperature"** or RT refers to temperatures of about 20°C, this means referring to temperatures in the range 18° C to 25°C. Such temperatures will include, 18°C, 19°C, 20°C, 21°C, 22°C, 23°C, 24°C and 25°C. Room temperature and ambient temperature may be interchangeable used herein and refer to the same.

In the following description, the expressions **"isocyanate free" and "non-isocyanate"** refer to compositions or formulations which do not contain polyisocyanates as starting reactive materials.

The term **"ketone"** denotes a C=O group.

The term **"heteroatom"** denotes an atom selected from N, O, S, Si and S(O)n (where n is 0, 1 or 2), SiO.

The term **"alkyl"** denotes a saturated hydrocarbon chain, for example a hydrocarbon chain from 1 to 20 carbon atoms.

The term **"cycloalkyl"** denotes a monovalent or bivalent 3 to 8 membered carbon ring, for example cyclopropyl, cyclobutyl, cyclopentyl, cyclohexyl, cycloheptyl or cyclooctyl.

The term **"heterocycle"** denotes monovalent or bivalent non-aromatic mono- or bi-cyclic radical of four to nine ring atoms in which one to three ring atoms are heteroatoms independently selected from N, O and S(O)n (where n is 0, 1 or 2), with the remaining ring atoms being C. Particular is piperidyl or a cyclic carbonate.

The term **"alkene"** denotes an unsaturated chain, involving a carbon-carbon double bond, such as an allyl, and optionally comprising other functions such as a (meth)acrylate, a (meth)acrylamide and the like.

The term **"aryl"** denotes a monovalent or bivalent aromatic carbocyclic group containing 6 to 14, particularly 6 to 10, carbon atoms and having at least one aromatic ring or multiple condensed rings in which at least one ring is aromatic. Examples include phenyl, benzyl, naphthyl, biphenyl, anthryl, azalenyl or indanyl.

The term **"heteroaryl"** denotes a monovalent or bivalent cyclic aromatic group containing 1, 2 or 3 heteroatoms, having at least one aromatic ring or multiple condensed rings in which at least one ring is aromatic. The aromatic ring may be a 6 membered ring, such as pyridinyl, or a 5-membered ring, such as thiazolyl, isoxazolyl, isothiazolyl, oxadiazolyl, imidazolyl, triazolyl or thiadiazolyl.

The term **"molar ratio"** refers to the amount of moles of a compound versus the amount of moles of a second compound. The amount of moles is calculated by dividing the mass of a compound by its molar mass. In the case of a compound having multiple functions, the amount of moles (obtained by dividing the mass in g of the said compound by its molar mass in g/mol) is multiplied by the number of functions being able to react. The amount obtained after multiplication by the number of function(s) is usually referred to as an equivalent amount. In the present case, the amount of moles of cyclic carbonate groups is always taking into account the number of functions being able to react and is thus always an equivalent amount. For example, 1g of a cyclic carbonate compound containing three cyclic carbonate groups having a molar mass of 434 g/mol contains 1/434 * 3 = 0.0069 moles of cyclic carbonate groups.

The term **"equivalent"** refers to an amount of moles taking into account the multiplicity of functions in a compound.

The term **"vinylene",** also known as ethenylene or 1,2-ethenediyl is a divalent functional group (a part of a molecule) with formula -CH=CH-.

The term **"exo-vinylene cyclic carbonate"** refers to a cyclic carbonate compound or group having a double bond directly on the ring system comprising the carbonate group.

The term **"endo-vinylene cyclic carbonate"** refers to a cyclic carbonate compound or group having a double bond within the ring system comprising the carbonate group.

The term **"activated cyclic carbonates"** refers herein to cyclic carbonates having at least one cyclic carbonate group selected from an exo-vinylene cyclic carbonate or an endo-vinylene cyclic carbonate. This compound is also referred herein to compound J.

The term **"terminal cyclic carbonate group"** refers to a cyclic carbonate group attached in the terminal position of a compound and/or at the end of a chain of a compound.

The term **"exotherm"** refers to the heat liberated by some of the chemical reactions occurring in the process or in other words giving rise to exothermic reactions which have heat as a by-product.

The term **"functionality"** refers to the number of reactive groups attached to a single molecule. An amine or polyol with a functionality of 2 refers to a diamine or a diol. An amine or polyol with a functionality of three refers to a triamine or a triol.

The term **"multifunctional"** refers to the number of functional groups in a compound. A multifunctional cyclic

carbonate refers to a compound comprising more than one cyclic carbonate functional group.

The improved curable isocyanate-free formulation of the present invention comprises at least one activated cyclic carbonate having at least one cyclic carbonate group selected from an exo-vinylene cyclic carbonate or an endo-vinylene cyclic carbonate **(compound J),** optionally at least one multifunctional cyclic carbonate having at least two terminal cyclic carbonate groups **(compound A),** at least one multifunctional amine **(compound B),** water or/and a water source and optionally at least one catalyst **(compound D),** optionally an epoxide compound **(compound I)** and optionally a filler and wherein compound A is optional in case compound J is a multifunctional activated cyclic carbonate comprising at least two terminal cyclic carbonate groups.

## Multifunctional cyclic carbonates (compound A)

Compound A is chosen from multifunctional cyclic carbonates having at least two terminal cyclic carbonates (at the end of the chain), also referred to as multifunctional external cyclic carbonates or a mixture thereof. In general, said compounds A correspond to formula (I):

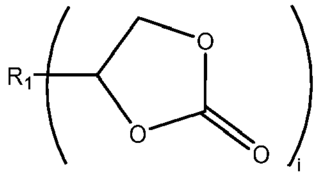
Formula (I)

wherein

- i is an integer higher than or equal to 2, in particular from 2 to 10, more particularly 2 or 3,
- $R_1$ is a carbon bond between the cyclic carbonate rings or is a linear or branched hydrocarbon chain, which may be unsubstituted or substituted and wherein one or several hydrocarbon groups of said hydrocarbon chain may be replaced by a heteroatom, a ketone, a cycloalkyl, a heterocycle, an aryl or a heteroaryl, each of which may be unsubstituted or substituted, said hydrocarbon chain having at least 2 carbon atoms, in particular from 3 to 60 carbon atoms,

According to embodiments, $R_1$ may be an oligomer chain, for example an oligomer chain of polyurethane or polyhydroxyurethane.

Suitable examples of compounds A for use in the present invention may be found in patent application WO2021004993, incorporated herein by reference.

Particularly preferred compounds A are (note that Trice here below may also be referred to as TMPTC).

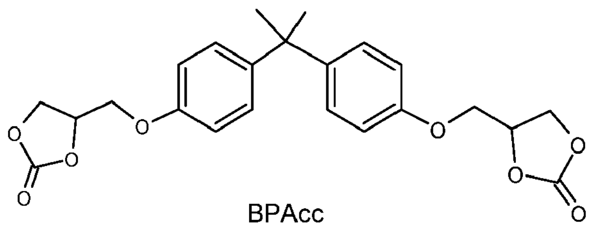
BPAcc

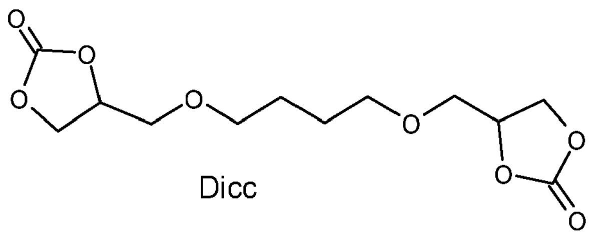
Dicc

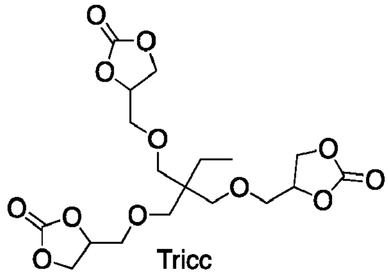
Tricc

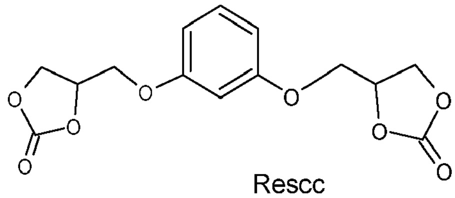
Rescc

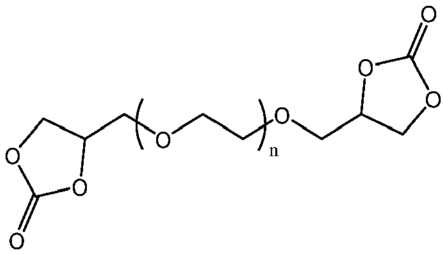

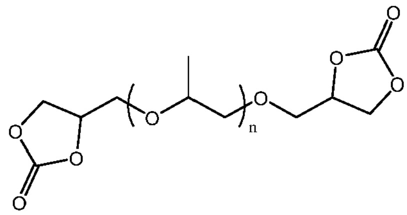

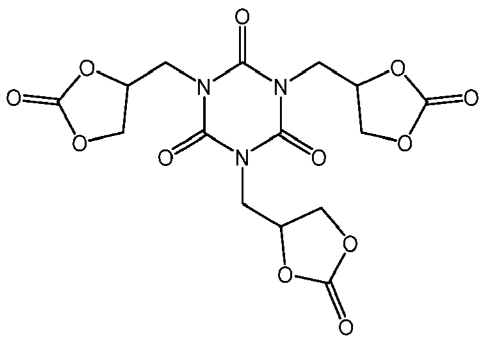

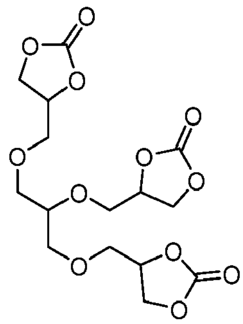

The amount of compound A generally ranges from 18 wt% to 80 wt%, in particular from 40 wt% to 80 wt %, more in particular from 50 to 80 wt%, the percentage being expressed relative to the total weight of the formulation.
It may be preferred to mix two or more of compounds A to reach the amount recited above.

**Multifunctional amines (compound B)**

Compound B is chosen from multifunctional amines or a mixture thereof. Said multifunctional amine comprises at least two primary amines or at least two secondary amines or at least one primary amine and one secondary amine. Additionally, tertiary amines may also be present in compound B. In general, said compounds B correspond to formula (II):

$R_2$-(NHR')$_j$ Formula (II)

wherein
j is an integer higher than or equal to 2, in particular from 2 to 6,

- $R_2$ is an aryl or a heteroaryl, each of which may be unsubstituted or substituted, or a linear or branched hydrocarbon chain, which may be unsubstituted or substituted, and wherein one or several hydrocarbon groups of said hydrocarbon chain may be replaced by a heteroatom, a cycloalkyl or a heterocycle, each of which may be unsubstituted or substituted, said hydrocarbon chain having at least 2 carbon atoms, in particular from 2 to 60 carbon atoms, more particularly from 2 to 20 carbon atoms, even more particularly from 2 to 15 carbon atoms, and
- R' each independently may be hydrogen, an alkyl or a cycloalkyl, R' is preferably hydrogen.

According to embodiments, compound B acts as a hardener by reacting with cyclic carbonate groups of compound J and optionally compound A, compound E and F as described hereinafter, thereby cross-linking the cyclic carbonate chains to each other.
Compound B can also act as a catalyst by increasing the basicity of the formulation. Amines with a pKa of 9 or

higher are preferred to enable this role of catalyst, for example a pKa of 11 of higher, preferably a pKa of 15 or higher, more preferably a pKa of 20 or higher.

Examples of suitable compounds B for use in the present invention can be found in patent application WO2021004993, incorporated herein by reference.

The use as compound B of multifunctional amine with long chain segments and/or a low number of $-NH_2$ functionalities (such as 1,6-diaminohexane or Priamine® 1074) may yield foams being more flexible, while the use of polyamines with short chain segments and/or a high number of $-NH_2$ functionalities (such as Lupasol® FG, isophorone diamine or m-xylylenediamine) may yield foams being more rigid.

Alternatively, secondary multifunctional amines can also be used instead of primary ones, or be used in combination with primary ones.

Particularly preferred compounds B are

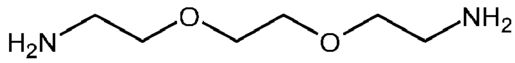

DiA also referred to as EDR 148

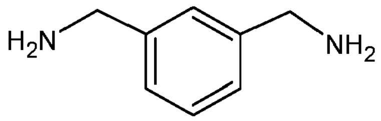

m-x DiA

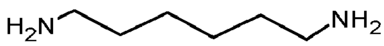

hm DiA

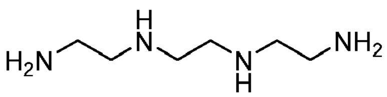

oc Dia

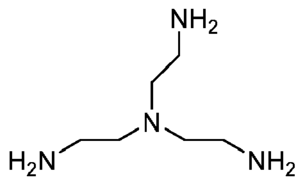

triA

and 1,2 cyclohexanediamine (CyH Dia). In the latter case, the amine is a secondary amine. Secondary amines are less reactive than primary amines towards cyclic carbonates. A lower reactivity rate may be interesting to slow down the crosslinking and hence to favor the hydrolysis rate versus the aminolysis rate. In the case of TriA, three primary amines are linked to a central tertiary amine.

The amount of compound B generally ranges from 10 wt% to 80 wt%, in particular from 10 to 70 wt%, more in particular from 10 wt% to 50 wt %, most preferable in the range 10 to 30 wt%, the percentage being expressed relative to the total weight of the formulation.

**Activated cyclic carbonates (compound J)**

Compound J, also referred to as an activated cyclic carbonate, is a cyclic carbonate having at least one cyclic carbonate group selected from an exo-vinylene cyclic carbonate or an endo-vinylene cyclic carbonate.

A cyclic carbonate having at least one cyclic carbonate group selected from an exo-vinylene cyclic carbonate corresponds to following formula III:

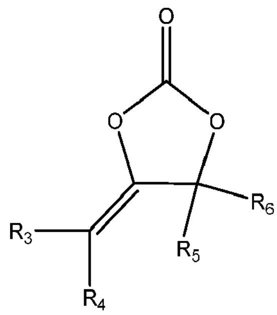

Formula (III)

wherein

- $R_3$, $R_4$ independently of one another each denote hydrogen, an allyl, an aryl or a C1 to C20 alkyl chain optionally substituted with an alkene, an allyl, a phenyl, an acrylate, a methacrylate, an acrylamide group, preferably a hydrogen,
- $R_5$, $R_6$ independently of one another each denote hydrogen, an allyl, an aryl or a C1 to C20 alkyl chain optionally substituted with an alkene, an allyl, a phenyl, an acrylate, a methacrylate, an acrylamide group, or $R_5$ and $R_6$ together form a cycloalkyl chain, preferably a methyl, and
- Optionally $R_3$, $R_4$, $R_5$ and/or $R_6$ comprise at least one further cyclic carbonate group selected from an endo-vinylene cyclic carbonate and/or exo- vinylene cyclic carbonate group.

Examples according to formula III are below:

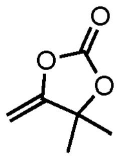
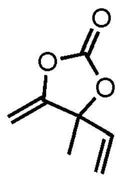

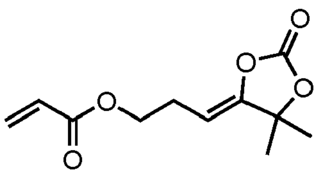
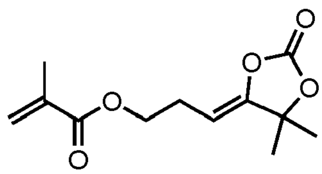

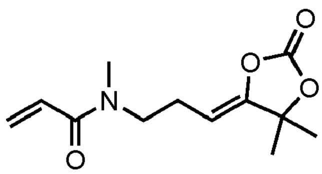

A cyclic carbonate having at least one cyclic carbonate group selected from an endo-vinylene cyclic carbonate corresponds to following formula IV:

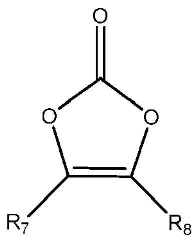

Formula (IV)

wherein

- $R_7$, $R_8$ independently of one another each denote hydrogen, an allyl, an aryl or a C1 to C20 alkyl chain optionally substituted with an alkene, an allyl, a phenyl, an acrylate, a methacrylate, an acrylamide group, preferably a hydrogen or methyl group, and
- Optionally $R_7$ and/or $R_8$ comprise at least one further cyclic carbonate group selected from an endo-vinylene cyclic carbonate and/or exo- vinylene cyclic carbonate group.

Examples according to formula IV are the structures below:

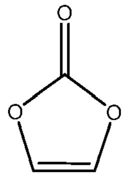
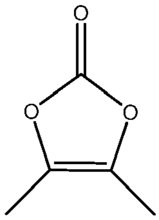
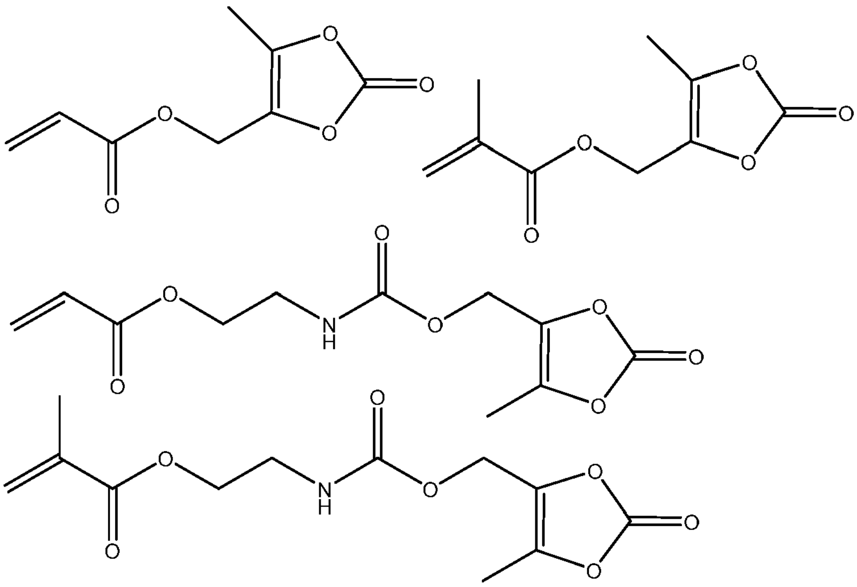

According to embodiments, the activated cyclic carbonate compound is a multifunctional activated cyclocarbonate having multiple cyclic carbonate groups selected from exo-vinylene cyclic carbonate and/or an endo-vinylene cyclic carbonate groups.

Examples of multifunctional activated cyclocarbonate having two cyclic carbonate groups selected from exo-vinylene cyclic carbonate correspond formula (V) or (VI):

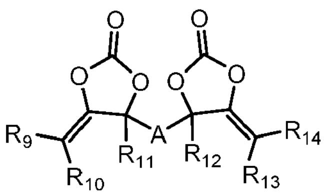 (Formula V) 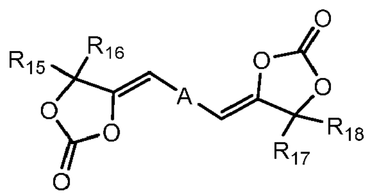 (Formula VI)

Wherein

- $R_9$, $R_{10}$, $R_{13}$, $R_{14}$ independently of one another each denote hydrogen, an allyl, an aryl or a C1 to C20 alkyl group, preferably a C1 to C10 alkyl group, more preferably a C1 to C3 alkyl group, most preferably a hydrogen, and
- $R_{11}$, $R_{12}$, independently of one another each denote hydrogen, an allyl, an aryl or a C1 to C20 alkyl group, preferably a C1 to C10 alkyl group, more preferably a C1 to C3 alkyl group, most preferably a methyl group, and
- $R_{15}$, $R_{16}$, $R_{17}$, $R_{18}$ independently of one another each denote hydrogen, an allyl, an aryl or a C1 to C20 alkyl group, preferably a C1 to C10 alkyl group, more preferably a C1 to C3 alkyl group, most preferably a methyl group, or an aryl

group, preferably a phenyl group, and

- A is an organic linking group selected from a linear, branched, saturated, unsaturated, cyclic and/or non-cyclic aliphatic, aromatic or araliphatic hydrocarbon group, preferably having 1 to 20, more preferably 1 to 12, most preferably 1 to 8 carbon atoms and optionally further containing one or more functional groups selected from ether, ester, amide, amine, carboxyl, sulfur, halogen and/or urethane, and
- Optionally A, $R_{11}$ and $R_{12}$ in formula (V) are linked to each other to form a cyclic structure, and
- Optionally $R_{15}$ and $R_{16}$, and/or $R_{17}$ and $R_{18}$ in formula (VI) are respectively linked to each other to form a cyclic structure

Preferred examples are:

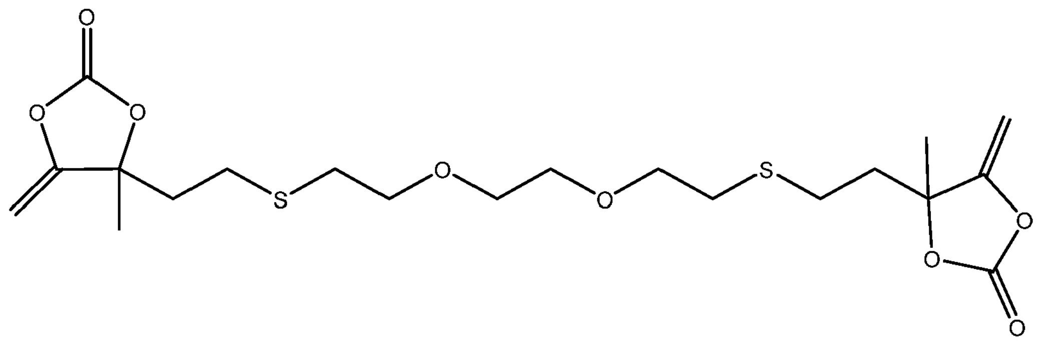

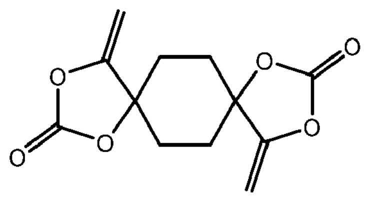

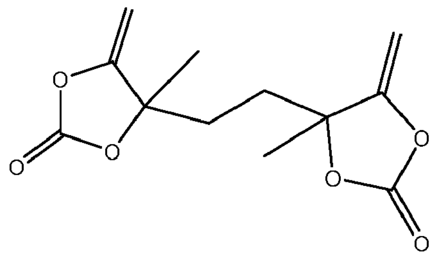

According to preferred embodiments, the multifunctional endo-vinylene cyclic carbonate is corresponding to following compound corresponding to formula VII:

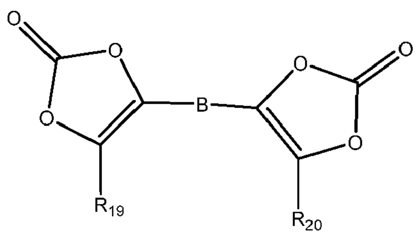

(Formula VII)

Wherein

- $R_{19}$ and $R_{20}$ independently of one another each denote hydrogen, an allyl, an aryl or a C1 to C20 alkyl group, preferably a C1 to C10 alkyl group, more preferably a C1 to C3 alkyl group, most preferably a hydrogen or methyl group, and
- B is an organic linking group selected from a linear, branched, saturated, unsaturated, cyclic and/or non-cyclic

aliphatic, aromatic or araliphatic hydrocarbon group, preferably having 1 to 20, more preferably 1 to 12, most preferably 1 to 8 carbon atoms and optionally further containing one or more functional groups selected from ether, ester, amide, amine, carboxyl, sulfur, halogen and/or urethane.

Examples of a multifunctional endo-vinylene cyclocarbonate having two cyclic carbonate groups selected from endo-vinylene cyclic carbonate:

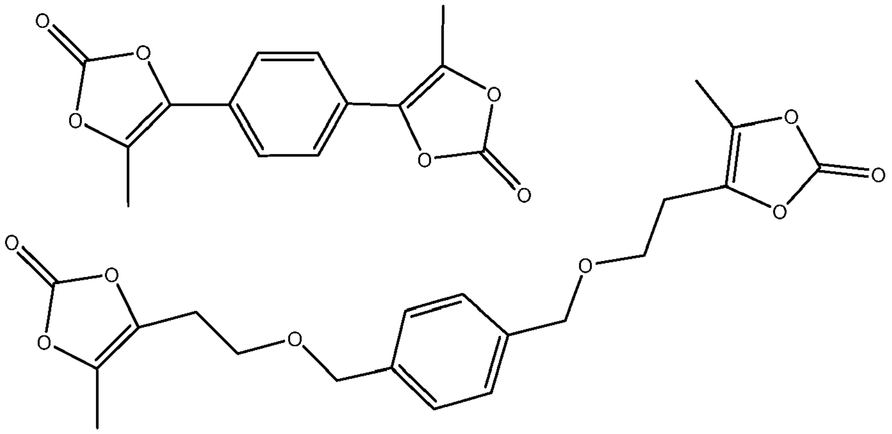

The amount of compound J generally ranges from 1 wt% to 80 wt%, in particular from 1 wt% to 40 wt %, more in particular from 2 to 20 wt%, the percentage being expressed relative to the total weight of the formulation.

According to embodiments, the amount of compound J is from 1 wt% to 40 wt%, in particular from 1 wt% to 30 wt %, more in particular from 2 to 20 wt%, the percentage being expressed relative to the total weight of the formulation and the amount of compound A is from 18 to 80 wt%, in particular from 40 to 80 wt%, more in particular from 50 to 80 wt%, the percentage being expressed relative to the total weight of the formulation and wherein.

It may be preferred to mix two or more of compounds J to reach the amount recited above.

In case compound J is a multifunctional activated cyclic carbonate comprising at least two terminal cyclic carbonate groups and compound A is not present the amount of compound J ranges from 18 wt% to 80 wt%, in particular from 40 wt% to 80 wt %, more in particular from 50 to 80 wt%,

**Water**

Water contained in the formulation may be distilled water or tap water. Neutral water (pH = 7) or basic water (pH > 7) is preferred, although acid water (pH < 7) can also be used. Water can be introduced alternatively or additionally in the formulation through a water source.

By a water source, one means any compound, liquid, solid or gaseous containing water and/or generating or releasing water during the curing conditions to obtain a self-blowing foam from the formulation of the invention so that it can trigger hydrolysis of compound A and/or compound J.

An example of a suitable water source is a hydrate. A hydrate may be defined as a compound that absorbs water molecules from its environment and includes them as part of its structure. Hydrates include inorganic or organic salts and mixtures thereof.

Examples of suitable hydrates include: sodium carbonate decahydrate $Na_2CO_3{\cdot}10H_2O$, magnesium sulphate heptahydrate ($MgSO_4.7H_2O$), sodium tetraborate decahydrate ($Na_2B_4O_7{\cdot}10H_2O$ borax), and sodium sulphate decahydrate ($Na_2SO_4{\cdot}10H_2O$), sodium pyrophosphate decahydrate $Na_4P_2O_7{\cdot}10H_2O$, copper sulfate trihydrate ($CuSO_4{\cdot}3H_2O$), copper sulphate pentahydrate ($CuSO_4$. $5H_2O$), cobalt (II) chloride hexahydrate ($CoCl_2{\cdot}6H_2O$), the double salts known collectively as alums ($M^{+2}SO_4{\cdot}M^{+3}{}_2(SO_4)_3{\cdot}24H_2O$, where $M^+$ is a monopositive cation, such as $K^+$ or $NH_4^+$, and $M^{3+}$ is a tripositive cation, such as $Al^{3+}$ or $Cr^{3+}$), lithium chloride hydrate ($LiCl\ xH_2O$), hydrotalcite ($Mg_6Al_2(CO_3)(OH)_{16}$ $.4H_2O$) and mixtures thereof. Organic salts may include hydrated ammonium, imidazolium or phosphonium salts and mixtures thereof.

Preferred hydrates are sodium tetraborate decahydrate, sodium pyrophosphate decahydrate, hydrotalcite.

A water source may also be the air humidity under conditions allowing to provide a total amount of water in the formulation of from 0.1 to 50 wt%.

A water source may also be contained in hygroscopic reagents, such as hygroscopic macromolecules such as polyethylene glycol, cellulose, lignosulfonate, gelatin for example. A water source can also be a suspension of colloidal silica particles such as those from Ludox® for example.

The total amount of water or/and water provided by the water source present in the formulation generally ranges

from 0.025 wt% to 50 wt%, in particular from 0.05 wt% to 40 wt%, in particular from 0.1 to 30 wt%, in particular from 0.5 wt% to 20 wt%, in particular from 1 to 10 wt%, in particular from 1 to 5 wt%, more in particular from 0.25 wt% to 3 wt %, the percentage being expressed relative to the total weight of the formulation.

It will easily be understood that such weight amount of water depends on the different compounds present in the formulation and in particular of potential fillers. As the water is acting as reagent with the cyclic carbonate groups of compound A, it may be preferred instead or supplementary to the above specified ranges of total water to use a total amount of water that is related to the molar ratio of total water versus the cyclic carbonate groups of compound A and/or compound J, molar ratio which is specified hereafter.

A source of water may also be the water entrapped in one or more of the reagents. For example, it may come from hygroscopic reagents or from hydrates. Macromolecules such as for example polyethylene glycol, cellulose, lignosulfonate or gelatin may also contain an amount of water sufficient to induce hydrolysis of the formulation of present invention.

An amount of hydrate when present in the formulation as a water source may generally ranges from 0.05 wt% to 100 wt%, preferably from 0.1 wt% to 50 wt%, more preferably from 1 to 20 wt%. The amount of hydrate is chosen so that the total amount of water in the formulation is comprised between 0.025 and 50 wt%, thus taking into account the amount of water added as such, if any. The amount of water contained in the water source such as the hydrate may for example be determined through a thermogravimetry analysis (TGA) of the water source. The weight loss below the curing temperature (for example 100°C) determined by thermogravimetry may hence be used to calculate the amount of water provided in the formulation through the analyzed water source.

An amount of hydrates when present in the formulation as a catalyst may generally range from 0.1 to 15 wt%.

**Catalyst (Compound D)**

Optional compound D, the catalyst, may be used to further increase the kinetics of the carbonate/amine reaction (thus the formation of NIPU) and the hydrolysis of the cyclic carbonate and thus the foaming. It has been observed that multifunctional amine can act as a suitable catalyst of the hydrolysis reaction. In some cases however it will be preferred to add a separate catalyst to accelerate the curing and foaming of the formulation and to obtain a more expanded foam. But suitable foams can also be obtained in some cases without using a catalyst.

A wide range of catalysts can be used (see for instance Blain et al., Green Chemistry 2014, 16, 4286). The choice of suitable catalyst depends on the specific formulation used but also on the temperature used to form the foam. As nonlimiting examples, compound D can be chosen from amine catalysts or organic bases such as triazabicyclodecene (TBD), 1,4-diazabicyclo[2.2.2]octane (DABCO), 1,8-diazabicyclo[5.4.0]undec-7-ene (DBU), 1,5-diazabicyclo[4.3.0]non-5-ene (DBN), 7-methyl-1,5,7-triazabicyclo[4.4.0]dec-5-ene (MTBD), Barton's based, Verkade base or other guanidines and amidines, trimethylhydroxyethyl ethylene diamine, trimethylaminopropylethanolamine, dimethylethanolamine, bis(2-dimethylaminoethyl) ether, triethylenediamine, dimethylaminocyclohexane, N-methyl morpholine, dimethylaminopyridine (DMAP), triethylamine (NEts), trimethylamine, phosphazenes, phosphines (triaryl and trialkylphosphines).

The compound D may also be chosen from ionic salts or ionic liquids composed of a combination of a cation and an anion. The cation may be selected from alkali metals such as $Na^+$, $Li^+$, $K^+$, $Cs^+$ or other metal such as described in WO2021004993, incorporated herein by reference.

Other suitable compounds D include inorganic bases such as hydroxides, metal hydroxides, carbonates, hydrogenocarbonates, phosphates, hydrogenophosphates, borates, pyrophosphates. Suitable compounds D are also metal salts of inorganic acid or organometallic catalysts such as stannous octoate, lead octoate, dibutyltin dilaurate, potassium acetate or potassium ethyl-hexoate, or mixtures thereof. Further suitable compounds D include phosphines such as triarylphosphines and monoalkylbiarylphosphines, bases, thioureas, phosphazenes, carbenes or masked carbenes (as described by Taton et al in "N-Heterocyclic carbenes (NHCs) as organocatalysts and structural components in metal-free polymer synthesis", Chem. Soc. Rev. 2013, 42, 2142).

Mixtures of several different catalysts, of the same class or not, may also be used.

Particularly preferred catalysts for use as compound D in the present invention are 1,8-diazabicyclo[5.4.0]undec-7-ene (DBU), tetrabutyl ammonium oxalate, tetrabutyl ammonium phenolate (TBAP), tetrabutyl ammonium hydroxide, potassium carbonate, cesium carbonate and potassium or sodium phosphate (mono, di or tribasic forms), potassium or sodium or calcium hydroxide, sodium tetraborate, sodium pyrophosphate.

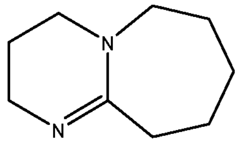

(DBU)

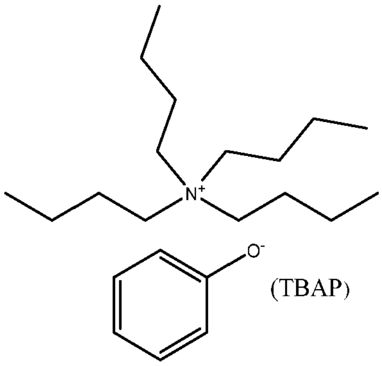

(TBAP)

Hydrated inorganic bases can also be used to catalyze the reaction and do not necessarily require the addition of water or/and another water source in the formulation. Preferred hydrated inorganic bases are sodium tetraborate decahydrate, sodium pyrophosphate decahydrate, sodium phosphate dodecahydrate. In the following, these hydrated inorganic bases are called hydrated catalysts. Such hydrated catalysts hence can perform a dual function, as catalyst and as water source.

Compound D may also act as a hardener by reacting with the epoxide groups of compound I (if present) thereby cross-linking the cyclic carbonate chains to each other.

If present, the amount of compound D generally ranges from 0.1 wt% to 50 wt%, in particular from 0.5 wt% to 25 wt %, and more particularly from 0.5 wt% to 10 wt%, the percentage being expressed relative to the total weight of the formulation.

**Epoxides and Polyepoxides (compound I)**

Optionally the curable isocyanate-free formulation of the invention may further comprise epoxides (Compound I). Compound I is chosen from compounds comprising at least one epoxide group (referred to as "epoxide"), compounds comprising more than one epoxide group (referred to as "polyepoxides"), or a mixture thereof and will contribute to the crosslinking of the material.

Compound I generally correspond to formula (VIII):

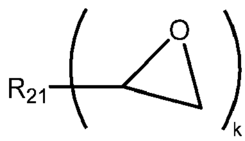

Formula (VIII)

Wherein:

- k is an integer, in particular from 1 to 10, more particularly 2 or 3,
- $R_{21}$ is a carbon bond between the epoxide rings when k is from 2, or is a linear or branched hydrocarbon chain, which may be unsubstituted or substituted and wherein one or several hydrocarbon groups of said hydrocarbon chain may be replaced by a heteroatom, a ketone, a cycloalkyl, a heterocycle, an aryl or a heteroaryl, each of which may be unsubstituted or substituted, said hydrocarbon chain having at least 2 carbon atoms, in particular from 3 to 60 carbon atoms.

According to embodiments, the compound I according to the invention used to manufacture the $CO_2$ self-blowing NIPU foams at room temperature is selected from compounds comprising at least one epoxide group such as mono-epoxides and/or polyepoxide compounds comprising more than one epoxide group, preferably selected from a di-epoxide and/or tri-epoxide compound such as trimethylolethane triglycidyl ether (TMPTE), 1,4 butanediol diglycidyl ether (BDDE), Bisphenol A diglycidyl ether and combinations thereof.

According to embodiments, the compound I according to the invention used to manufacture the $CO_2$ self-blowing NIPU foams at room temperature in short reaction time is comprising at least one linear epoxide compound. Preferably the amount of epoxide compounds is in the range 0 up to 80 wt%, preferably from 1 to 15 wt%, based on the total weight of all epoxide compounds in the isocyanate-free formulation of the invention.

According to embodiments, the compound I according to the invention used to manufacture the $CO_2$ self-blowing NIPU foams at room temperature in short reaction time is comprising at least one aromatic epoxide compound, preferably

the amount of aromatic epoxide compounds is at least 50 wt%, more preferably at least 60 wt%, most preferably at least 80 wt% based on the total weight of all epoxide compounds in the isocyanate-free formulation of the invention.

Some specific examples of compound I are illustrated below.

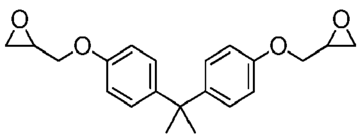

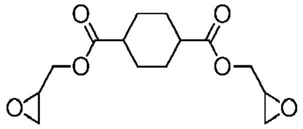

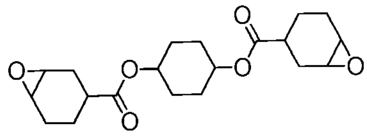

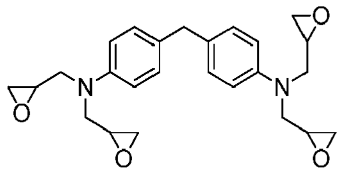

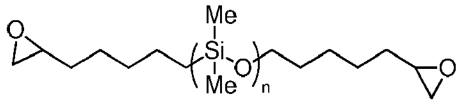

Particularly preferred compounds I are:

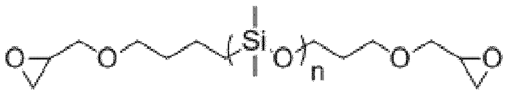

(E-SI 2330)

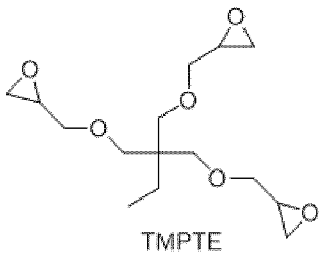

TMPTE

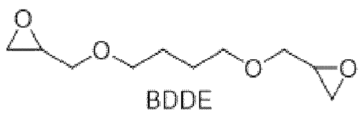

BDDE

Epoxide may also be present as part of compound A or compound J. For example, compound A is a multifunctional cyclic carbonate having at least two terminal cyclic carbonates and having at least one epoxide group.

Addition of epoxide compounds to the isocyanate-free formulation of the invention has the advantage of giving rise to an exothermic reaction. For example, it may give rise to a second exotherm (beside the exotherm originating from the reaction of compound J (the activated cyclic carbonate) with compound B (the multifunctional amine). Advantageously, aminolysis with epoxide may also participate in the construction of the polymer matrix and/or to its crosslinking.

**Monofunctional cyclic carbonates (Compound E)**

Optionally the curable isocyanate-free formulation of the invention may further comprise a monofunctional cyclic carbonate (Compound E) which is different than compound J and hence does NOT have exo-vinylene cyclic carbonate groups or endo-vinylene cyclic carbonate groups. This compound E may act as a reactive diluent and is chosen from monofunctional cyclic carbonates or a mixture thereof, which preferably correspond to formula (IX) or a mixture thereof.

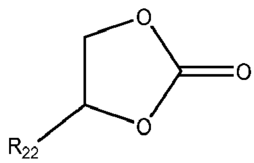

(Formula IX)

Wherein $R_{22}$ is hydrogen or an aryl or a linear or branched hydrocarbon chain, which may be unsubstituted or substituted e.g. with a functional group such as an alcohol, a secondary or tertiary amine, a carboxylic acid, an alkene, an ester, etc. and wherein one or several hydrocarbon groups of said hydrocarbon chain may be replaced by a heteroatom, a cycloalkyl, an aryl or a heterocycle, each of which may be unsubstituted or substituted, said hydrocarbon chain having at least 1 carbon atom, in particular from 2 to 60 carbon atoms, more particularly from 2 to 20 carbon atoms, even more particularly from 2 to 15 carbon atoms.

Suitable examples of compounds E for use in the present invention are ethylene carbonate, propylene carbonate, 4-vinyl-1,3-dioxolan-2-one, etc.

If present, the amount of compound E, a monofunctional cyclic carbonate, generally ranges from 0 wt% to 50 wt%, in particular from 1 wt% to 50 wt%, more in particular from 5 wt% to 10 wt %, the percentage being expressed relative to the total weight of the formulation.

**Multifunctional internal cyclic carbonates (Compound F)**

Optionally the curable isocyanate-free formulation of the invention may further comprise multifunctional internal cyclic carbonates (Compound F). Compound F may contribute to the formation of the NIPU matrix; due to sterical hindrance by the internal cyclic carbonates it reacts more slowly than compound A. Compound F is chosen from multifunctional internal cyclic carbonates thus having at least two cyclic carbonate groups within the chain (so-called internal cyclic carbonates) or any mixture thereof. An example of a suitable compound F is according to Formula (X):

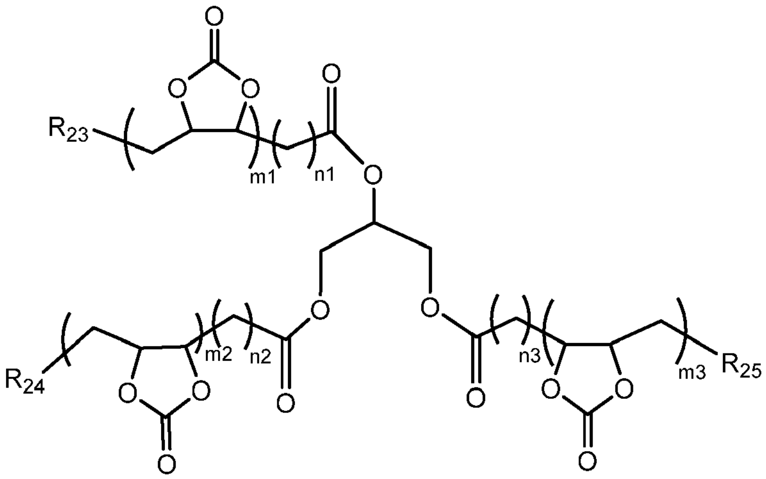

(Formula X)

wherein

- $R_{23}$, $R_{24}$, $R_{25}$ independently of one another each denote hydrogen or a C1 to C20 alkyl group, preferably a C1 to C10 alkyl group, more preferably a C1 to C3 alkyl group, most preferably a hydrogen
- m1, m2, m3 represent an integer from 0 to 10, with the sum of m1, m2 and m3 being at least 2,
- n1, n2, n3 represent an integer from 1 to 10.

**Fillers**

Optionally fillers may also be added, such as silica, clays, cellulose nanowhiskers, carbon black, carbon nanotubes, graphene, lignin, chitosan, etc. The addition of fillers may advantageously create nucleation nodes for the control of the foam density and size distribution of the cells (from a few nm to 1-2 mm). Fillers may also improve the mechanical performance of the foams. Foams containing fillers are referred to as composite foams. Fillers can be functionalized by appropriate reactive groups such as epoxides, amines, cyclic carbonates making them reactive.

Fillers may be carbonate minerals, clays or silica particles, for example hydrotalcite (a layered double hydroxide with formula $Mg_6Al_2CO_3(OH)_{16}\cdot H_2O$) or Laponite® S482 (a synthetic layered silicate). Such fillers may also be provided in a water suspension, whereby the filler may then also function as a water source.

**Additional chemical or physical blowing agents**

Although $CO_2$ blowing agent is generated in-situ the formulation of the present invention may contain additional

chemical or physical blowing agent. In particular physical blowing agent may be added, especially when NIPU foams with high thermal insulation performance are targeted. Examples of such suitable physical blowing agents include any of the physical blowing agents used to formulate thermal insulating foams such as alkanes (e.g. pentane), cycloalkanes (e.g. cyclopentane) and hydrofluoroalkanes. A preferred nonflammable liquid hydrofluorocarbon with no ozone depletion potential is Solkane® 365/227 or Solvokan®. The amount of these additional blowing agents ranges from 0 wt% to 70 wt%, preferably between 10 wt% and 30 wt%, the percentage being expressed relative to the weight of the formulation. These blowing agents are added to the formulation containing all the other ingredients generally at a temperature between 10 to 30°C in order to avoid complete vaporization of the blowing agent before effective mixing with the reaction mixture.

The reaction mixture may further contain optional ingredients such as plasticizers, organic and/or inorganic fillers, colorants, preservatives, odor masking agents, flame retardants, smoke suppressants, thixotropic agents, mould release agents, surfactants, foam stabilizers, biocides, antioxidants, UV stabilizers, antistatic agents or foam cell nucleators.

The molar ratio between compound J, compound A, compound B and water will affect the foaming of the formulation and the properties of the obtained foams. According to a preferred embodiment of the present invention an excess of cyclic carbonate groups (from compound J and/or compound A) with respect to amine groups (from compound B) is preferred, the excess of cyclic carbonates being used for reacting with water and thus for the generation of the foaming agent. A typical amine/cyclic carbonate molar ratio is 0.75. Other ratios can be used to modulate the foam properties, such as for example a molar ratio of 0.5, 1.0 or 1.25.

The molar ratio of total water including the water provided by the water source to cyclic carbonate groups from compound J and/or compound A is preferably between 0.025 and 8.0, preferably between 0.05 and 5.0, more preferably between 0.1 and 4.0, even more preferably between 0.25 and 2.0.

The amount of compound I generally ranges from 0 wt% to 80 wt%, from 1 wt% to 40 wt%, in particular from 1 wt% to 30 wt %, more in particular from 2 to 20 wt%, the percentage being expressed relative to the total weight of the formulation.

The amount of compound F, a multifunctional cyclic carbonate having at least two cyclic carbonate groups within the chain, generally ranges from 0 wt% to 50 wt%, in particular from 1 wt% to 50 wt%, more in particular from 2 wt% to 20 wt %, the percentage being expressed relative to the total weight of the formulation.

The formulation of the present invention is generally obtained by mixing the ingredients, compounds J, A (if present), B, water and/or a water source, optionally D, E, F and I at room temperature, preferably at a temperature up to 100°C, more preferably up to 80°C, even more preferably between 20 and 60°C, or between 20 and 25°C (also referred to as ambient temperature or room temperature). Alternatively, compounds A and J are first mixed to achieve melting of the compounds at 40°C and thereafter the other compounds of the formulation are added at lower temperature. The mixing can be performed using any suitable mixing equipment, including static mixing equipment, impingement mixing equipment, or other suitable mixing equipment.

According to an alternative embodiment, the formulation of the present invention may be obtained by mixing the ingredients at slightly higher temperature than room temperature (RT), e.g. 40°C to decrease the viscosity of the formulation prior foaming.

According to an alternative embodiment, the formulation of the present invention may be obtained by mixing the ingredients under elevated temperatures, e.g. up to 80°C temperature.

According to embodiments, the formulation of the present invention is compatible for foaming in higher temperature conditions. For example when intended applications are requiring working in heated molds and the formulation, prepared and mixed at room temperature, can be injected into heated mold or conveyor for foaming.

The mechanical performance of the foams (from flexible to rigid materials) may also be adjusted by selecting suitable structure of cyclic carbonates (compounds J, A, E, F) and/or amines (compound B) and/or polyepoxides (compound I).

According to the invention, the blowing agent ($CO_2$) is formed by hydrolysis of cyclic carbonates (compounds J and A and if present E and F) optionally in the presence of a catalyst (compound D). The content of $CO_2$ (and thus the foam density) and 1,2-diols produced can be adapted by the content of water and/or water source added to the formulation.

According to the invention, a curable isocyanate-free formulation for preparing a polyurethane self-blowing foam may comprise compound A, compound B, compound J, water or/and a water source, optionally compound D; wherein A, J and B may have been optionally pre-mixed or pre-cured.

It will be understood by the person skilled in the art that under high temperature (such as above 100°C) some physical blowing may occur through evaporation. Foaming conditions are however preferably in favour of chemical blowing only or as a major blowing process.

According to another aspect of the present invention a process for preparing a self-blowing non-isocyanate polyurethane foam is provided comprising the steps of providing a formulation as described above by mixing compounds A (if present), J, B, water or/and a water source and optionally other additives, optionally in the presence of compound D and I so as to form a viscous mixture and curing said formulation so as to promote the formation of $CO_2$ and form a non-isocyanate polyurethane foam.

It is advantageous that all compounds can be mixed at once and that reaction may occur fast after such mixing.

The curing and the expansion of the polymer matrix may occur simultaneously and can be achieved at room temperatures, preferably at temperatures between 18°C and 25°C, more preferably between temperatures between 20-25°C within a relatively short time after the mixing of the ingredients (between 10 seconds to 10 minutes, more preferably between 30 seconds and 5 minutes) and leads to a homogeneous foam. Although the foaming can be fast, the expanded reaction mixture can be cured for a longer time (2 minutes to 24 h) by heating until it is in tack free state. Curing to a tack-free state generally takes place within few minutes, such as within 5 minutes, to few hours such as from to 2 to 4 hours. It should be understood that the time can be dependent on the temperature and vice-versa.

The foaming step may be performed in any type of mold, for example silicon molds, metallic molds, coated molds, open or closed molds.

Optionally, compounds E, F, fillers and/or I can be added to the ingredients in the first step of the process in order to adjust the viscosity of the mixture and/or the final properties of the foam. These compounds may be added independently from each other or may be added in the form of a mixture.

According to another embodiment of the present invention the process for preparing a self-blowing non-isocyanate polyurethane foam comprises the steps of (1) mixing compounds J, A (if present), and optionally in the presence of a filler and/or compound I so as to form a viscous mixture, (2) adding compound B, water or/and a water source in such amounts that the molar ratio of total amount of water including water provided by the water source to cyclic carbonate groups from compound J and/or compound A is between 0.025 and 8.0, preferably between 0.05 and 5.0, more preferably between 0.1 and 4.0, even more preferably between 0.25 and 2.0, and optionally in the presence of compound D, and (3) curing the said mixture so as to form a non-isocyanate polyurethane foam. Optionally, compounds E and/or F can be added to the ingredients in the first step of the process or in step (2). In some cases, said curing can be performed by simply continuing the mixing.

In some embodiments, step (2) comprises mixing the added compounds with the mixture obtained in step (1).

In some embodiments, step (3) of curing occurs simultaneously to step (2).

According to a further embodiment of the present invention the process involves mixing compounds J, A (if present) in the presence of water or/and a water source and optional filler and/or compound I in suitable amounts as defined above so as to form a viscous mixture, optionally adding compound D to said mixture, adding compound B, and curing said mixture so as to promote the formation of $CO_2$ and form a non-isocyanate polyurethane foam. Optionally, compounds E and F can be added to the ingredients in the first step of the process in order to adjust the viscosity of the mixture and/or the final properties of the foam. In preferred embodiments where compound D is present, compound D is added (preferably simultaneously) together with water or/and a water source. In preferred embodiments, compound B is added (preferably simultaneously) together with water or/and a water source.

The process of the present invention provides the following advantages: no volatile organic compounds are released, no organic solvents are used, the process is performed at room temperature and hence very cost effective. Further the present process is compatible with existing manufacturing processes for conventional PU foaming. The formulation that is mixed at room temperature can also be foamed at higher temperature when needed, for instance in heated molds or conveyors.

According to a third aspect of the present invention a non-isocyanate polyurethane foam is provided obtainable by said process.

The obtained polyurethane foam contains urethane linkages and also oxazolidone moieties (i.e. cyclic urethanes moieties) when using exo-vinylene cyclic carbonates. The contents of the different linkages are fixed by the content of used precursors (amines, cyclic carbonates, water and optional epoxide and catalysts).

The process of the invention makes it possible to prepare flexible and rigid foams over a wide range of densities. The foam of the invention can be of high density (higher than 80 $kg/m^3$) or of low density (lower than or equal to 80 $kg/m^3$). The density of the foam of the invention can be less than 800 $kg/m^3$, in particular from 10 $kg/m^3$ to 400 $kg/m^3$, or from 20 $kg/m^3$ to 200 $kg/m^3$. The gel content of the foam can be from 25%, preferably from 30%, more preferably from 50% even more preferably from 75%. The gel content represents the weight percentage of insoluble fraction (crosslinked) versus the total weight of the foam (crosslinked and free polymeric chains). The higher the gel content, the higher is the crosslinking of the foam. The gel content is measured as follows: foam is weighted (mass1) before immersion in a good solvent (for example tetrahydrofuran) for 24h. During this immersion, un-crosslinked polymeric chains are dissolved in the solvent, while crosslinked part of the foam remains pristine. The foam is then rinsed and dried to remove the solvent and finally weighted (mass2). Gel content is measured by the formula: (mass2/mass1)*100.

The foam pore sizes are generally lower than 5000 μm, in particular lower than 1000 μm.

Preferably, the foams of the invention have a glass transition temperature from -40°C to 200°C.

The compression modulus of the foams of the invention can be from 0.005 MPa to 1000 MPa, in particular from 0.02 MPa to 200 MPa. The compression modulus is measured on an instron machine (5566) in compression mode at a rate of 1 mm/min. The slope of the strain/stress curve in the elastic regime is used to calculate the compression modulus.

The NIPU foams according to the present invention can be used in any sector wherein traditional PU foams can be used, for example in the automotive, aeronautic, building, housing, footwear and health sector. Suitable applications include sandwich panels for thermal insulation (building and transportations insulations) and/or acoustic insulation foams for wellness (mattress, furniture, seats, cars), gasket in foam/adhesion joints for sealing (concrete, glass, metals, wood), joints for car or building windows and for fixing solar cell panels, or as air filters for indoor air purification, or as decorative elements.

The viscous reactive and/or curable formulations of the present invention may be applied onto various substrates (metal, wood, glass, textiles...) using syringes or sprayers. The present formulations may also be used with continuous reactive extrusion-foaming or in reactive injection-molding. The formulation of the present invention may also be sprayable and cured in a second step. The formulation of the present invention may also be used for 3D printing for the construction of 3D foamed materials.

According to another aspect of the present invention, a process for recycling the obtained polyurethane foam is provided by compression molding or extrusion.

The NIPU foams according to the present invention can be easily recycled or repurposed to give them another life for other types of applications. The NIPU foams can be reprocessed by compression molding under thermal treatment or by extrusion (molding). Optionally a previous grinding step may be performed.

The reprocessing temperature of NIPU foams is generally between 100 and 250°C, preferably between 120 and 200°C, and more preferable between 140 and 180°C.

Advantageously, the recycling process, also referred to as reprocessing, is possible without any solvent addition and/or without any metallic reagents.

According to another aspect of the present invention, a recycled polyurethane foam is provided by said recycling the process.

Using these processes, the recycled foams subsequently can be processed as films, coatings, adhesives, fibers or as bulk materials by conventional processing techniques well-known by person of the art. Mixtures of NIPU foams of different properties can also be used to produce novel NIPU materials by applying the processing techniques described above. Their properties can be easily modulated by the nature of the NIPU foams that are mixed and by their content/composition.

The invention is illustrated by but not limited to the following examples.

DESCRIPTION OF FIGURES

Figure 1a is a micrography by Scanning Electron Microscopy (SEM) of the foam obtained in example 3, sample 3a.
Figure 1b is a micrography by Scanning Electron Microscopy (SEM) of the foam obtained in example 3, sample 3b.
Figure 1c is a micrography by Scanning Electron Microscopy (SEM) of the foam obtained in example 3, sample 3c.
Figure 2 is a SEM image of the foam obtained in example 5.
Figure 3 is a SEM image of the foam obtained in example 6.
Figure 4 are recorded exotherms of foams mentioned in example 1.
Figure 5 are recorded exotherms of foams mentioned in example 2

**EXAMPLES**

The following examples illustrate the formation of water-induced self-blowing NIPU foams induced by activated cyclic carbonate, from the following precursors:

**Activated cyclic carbonate**

**Multifunctional amine**

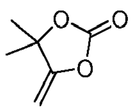
DMACC

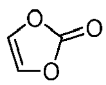
VC

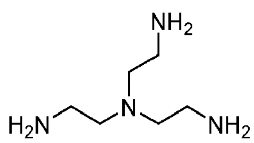
TREN

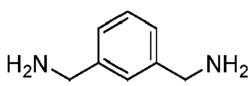
mXDA

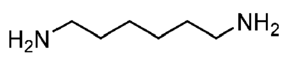
HMDA

**Catalyst**

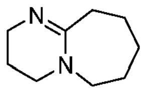

KOH

DBU

**Multifunctional cyclic carbonate**

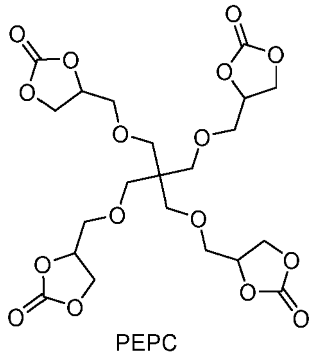

PEPC

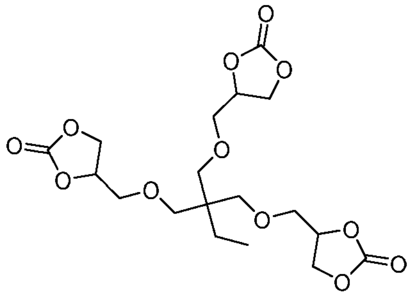

TMPTC

**Hydrotalcite**

$Mg_6Al_2(CO_3)(OH)_{16} \cdot 4H2O$

HTC

**Epoxyde**

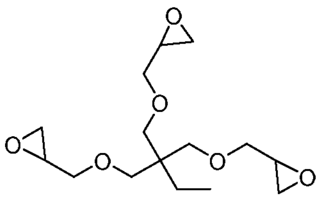

TMPTE

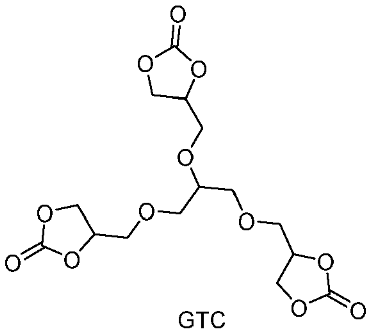

GTC

In the following examples, 5CC stands for a cyclic carbonate group, $NH_2$ for a primary amine group and eq for equivalent. Room temperature (RT) is assumed to be 25°C.

**Example 1:** The following example demonstrates the utilization of various equivalents of activated cyclic carbonate (DMACC) versus multifunctional cyclic carbonate (TMPTC) for room temperature foaming. In a 250 $cm^3$ polyethylene cup, TMPTC (31.40 g, 61.9 wt%, 72.29 mmol, 5CC = 216.86 mmol, 1.00 eq) was mixed with DMACC (4.17 g, 8.2 wt%, 32.53 mmol, 0.15 eq) and hydrotalcite (HTC 3.14 g, 10 wt% vs TMPTC). This mixture was first heated at 30-40 °C to achieve a homogeneous mixture then cooled till RT. In a glass vial, amine (TREN 9.51 g, 18.8 wt%, 65.07 mmol, $NH_2$ = 195.2 mmol, 0.90 eq) was measured. In a second glass vial, catalyst (KOH 1.52 g, 3.00 wt%, 27.10 mmol, 0.13 eq) was dissolved in $H_2O$ (0.98 g, 1.94 wt%, 54.21 mmol, 0.25 eq). Amine and catalyst solution were simultaneously added to the cup, stirred for 5 seconds at room temperature. An exotherm from 25°C to 105°C was observed together with a simultaneous foam formation. The foam reached maximum expansion within 2 minutes and hardened upon cooling. Figure 4 illustrates recorded exotherms of foams according to Example 1.

By modifying the equivalents of activated cyclic carbonate and adjusting the equivalents of amine to adhere to the stoichiometry of the reaction, we were able to produce foams with varying densities and gel contents, as detailed in Table 1. Measurements of densities of foams were conducted by cutting 10 mm x 10 mm x 10 mm cubes and recording their weights. Density was calculated according to the formula: $\frac{m\,(g)}{a\,(cm) * b\,(cm) * c\,(cm)} * 1000$, where m - mass of the sample, a, b and c - dimensions.

Gel content was obtained by immersing foam sample of approximately 0.2 g in THF at room temperature for 48 h. Further, by decanting the solvent, and drying the sample under vacuum at 80 °C for 24 h, the gel content was calculated according to the formula: $\frac{m(vial+dried\ sample)-m(vial)}{m(vial+initial\ sample)-m(vial)} * 100\%$.

Table 1. The density and gel content measurements of foams acquired in Example 1

| Sample | DMACC | TREN | Density (kg/$m^3$) | Gel content (%) |
|---|---|---|---|---|
| | (eq) | (eq) | | |
| 1a | 0.30 | 1.05 | 71 | 65.8 |
| 1b | 0.25 | 1 | 95 | 68.1 |
| 1c | 0.20 | 0.95 | 96 | 72.6 |
| 1d | 0.15 | 0.90 | 167 | 84.4 |

(continued)

| Sample | DMACC | TREN | Density (kg/m$^3$) | Gel content (%) |
|---|---|---|---|---|
| | (eq) | (eq) | | |
| 1e | 0.10 | 0.85 | 173 | 84.7 |
| 1f | 0.05 | 0.80 | 345 | 71.4 |

**Example 2:** Following the procedure in Example 1, foams were reproduced using a different activated cyclic carbonate (VC). Density and gel content measurements of resulted foams are included in Table 2. Figure 5 illustrates recorded exotherms of foams according to Example 2.

Table 2. The density and gel content measurements of foams acquired in Example 2

| Sample | VC | TREN | Density (kg/m$^3$) | Gel content (%) |
|---|---|---|---|---|
| | (eq) | (eq) | | |
| 2a | 0.30 | 1.05 | 221 | 58.3 |
| 2b | 0.25 | 1 | 247 | 66.5 |
| 2c | 0.20 | 0.95 | 278 | 76.3 |
| 2d | 0.15 | 0.90 | 285 | 79.8 |
| 2e | 0.10 | 0.85 | 220 | 73.2 |

**Example 3:** This example explores foaming outcomes based on different equivalents of catalyst (KOH) and $H_2O$. In a 250 cm$^3$ HDPE cup, TMPTC (31.40 g, 57.50 wt%, 72.29 mmol, 5CC = 216.86 mmol, 1.00 eq) was mixed with DMACC (6.95 g, 12.72 wt%, 54.21 mmol, 0.25 eq) and hydrotalcite (HTC 3.14 g, 10 wt% vs TMPTC). This mixture was first heated at 30-40 °C to achieve a homogeneous mixture then cooled till room temperature (RT). In a glass vial, TREN (11.63 g, 21.29 wt%, 79.51 mmol, $NH_2$ = 238.54 mmol, 1.06 eq) was measured. In a second glass vial, catalyst (KOH 0.914 g, 1.67 wt%, 16.26 mmol, 0.08 eq) was dissolved in $H_2O$ (0.59 g, 1.07 wt%, 32.53 mmol, 0.15 eq). TREN and catalyst solution were simultaneously added to the HDPE cup, stirred for 5 seconds at 25°C. An exotherm from 25 °C to 121 °C was observed together with a simultaneous foam formation. The foam reached maximum expansion within 1 min and hardened upon cooling. Images of samples 3a, 3b, 3c obtained by Scanning Electron Microscopy (SEM) are present in Figures 1a, 1b, 1c correspondingly. Density and gel content measurement results are detailed in Table 3.

Table 3. The density and gel content measurements of foams acquired in Example 3

| Sample | $H_2O$ | KOH | TREN | Density (kg/m$^3$) | Gel content (%) |
|---|---|---|---|---|---|
| | (eq) | (eq) | (eq) | | |
| 3a | 0.20 | 0.100 | 1.05 | 80 | 70.8 |
| 3b | 0.15 | 0.075 | 1.10 | 130 | 78.4 |
| 3c | 0.10 | 0.050 | 1.15 | 135 | 90.8 |
| 3d | 0.05 | 0.025 | 1.20 | 202 | 89.2 |

**Example 4:** Following the procedure in Example 3, foams were reproduced using a different multifunctional cyclic carbonate (PEPC). The measured density and the gel content of resulted foams are mentioned in Table 4.

Table 4. The density and gel content measurements of foams acquired in Example 4

| Sample | $H_2O$ | KOH | TREN | Density (kg/m$^3$) | Gel content (%) |
|---|---|---|---|---|---|
| | (eq) | (eq) | (eq) | | |
| 3a | 0.25 | 0.125 | 1 | 80 | 70.8 |
| 3b | 0.20 | 0.100 | 1.05 | 130 | 78.4 |
| 3c | 0.15 | 0.075 | 1.10 | 135 | 90.8 |

(continued)

| Sample | $H_2O$ | KOH | TREN | Density ($kg/m^3$) | Gel content (%) |
|---|---|---|---|---|---|
| | (eq) | (eq) | (eq) | | |
| 3d | 0.10 | 0.050 | 1.15 | 202 | 89.2 |

**Example 5:** Within this example, multiple amine compounds are introduced into the foam formulation. In a 250 $cm^3$ HDPE cup, PEPC (31.4 g, 54.32 wt%, 58.54 mmol, 5CC = 234.14 mmol, 1 eq) was combined with DMACC (7.50 g, 12.97 wt%, 58.53 mmol, 0.25 eq) and hydrotalcite (HTC 3.14 g, 10 wt% vs PEPC) at 30-40 °C (to achieve a homogeneous mixture), then cooled till 25°C. In a glass vial, two amines (mXDA 5.50 g, 9.52 wt%, 40.39 mmol, 0.35 eq; TREN 9.19 g, 15.89 wt%, 62.82 mmol, 0.81 eq; $NH_2$ total = 269.26 mmol) were added and stirred using a vortex stirrer. In a second glass vial, catalyst (KOH 0.66 g, 1.14 wt%, 11.71 mmol, 0.05 eq) was dissolved in $H_2O$ (0.42 g, 0.73 wt%, 23.41 mmol, 0.10 eq). Amines and catalyst solution were simultaneously introduced into the HDPE cup, stirred for 5 sec at 25°C. An exotherm from 25 °C to 117 °C was observed together with a simultaneous foam formation. The foam reached maximum expansion within 1 min and hardened upon cooling. An image of this foam captured by Scanning Electron Microscopy (SEM) is depicted in Figure 2. A rigid foam with a density of 110 Kg/ $m^3$ was obtained.

**Example 6:** This example introduces a different catalyst (DBU) into the foaming formulation. In a 250 $cm^3$ HDPE cup, PEPC (31.40 g, 53.28 wt%, 58.54 mmol, 5CC = 234.14 mmol, 1 eq) was combined with DMACC (7.50 g, 12.73 wt%, 58.53 mmol, 0.25 eq) and hydrotalcite (HTC 3.14 g, 10 wt% vs PEPC) at 30-40 °C (to achieve a homogeneous mixture), then cooled till 25°C. In a glass vial, amines (mXDA 5.50 g, 9.33 wt%, 40.39 mmol, 0.35 eq; TREN 9.19 g, 15.59 wt%, 62.83 mmol, 0.81 eq; $NH_2$ total = 269.26 mmol) were mixed with catalyst (DBU 1.78 g, 3.02 wt%, 11.71 mmol, 0.05 eq) and $H_2O$ (0.42 g, 0.72 wt%, 23.41 mmol, 0.10 eq), then stirred using a vortex stirrer. Amine, catalyst, and $H_2O$ were simultaneously added to the HDPE cup, stirred for 5 sec at 25°C. An exotherm from 25 °C to 120 °C was observed together with a simultaneous foam formation. The foam reached maximum expansion within 1 min and hardened upon cooling. A rigid foam with a density of 200 $Kg/m^3$ was obtained. An image of this foam obtained by Scanning Electron Microscopy (SEM) is depicted in Figure 3.

**Example 7:** This example introduces a foam made with a mixture of activated cyclic carbonates. In a 250 $cm^3$ HDPE cup, TMPTC (31.40 g, 59.20 wt%, 72.29 mmol, 5CC = 216.86 mmol, 1 eq) was combined with activated cyclic carbonates (DMACC 2.08 g, 3.93 wt%, 16.26 mmol, 0.08 eq; VC 3.27 g, 6.16 wt%, 37.95 mmol, 0.18 eq) and hydrotalcite (HTC 3.14 g, 10 wt% vs TMPTC) at 30-40 °C (to achieve a homogeneous mixture), then cooled till 25°C. In a glass vial, amine (TREN 12.16 g, 22.92 wt%, 83.13 mmol, 1.15 eq, $NH_2$ = 249.38 mmol) was measured. In a second glass vial, catalyst (KOH 0.61 g, 1.15 wt%, 10.84 mmol, 0.05 eq) was dissolved in $H_2O$ (0.39 g, 0.74 wt%, 21.69 mmol, 0.10 eq). Amine and catalyst solution were simultaneously added to the HDPE cup, stirred for 5 sec at 25°C. An exotherm from 25 °C to 118 °C was observed together with a simultaneous foam formation. The foam reached maximum expansion within 1 min and hardened upon cooling. A rigid foam with a density of 130 Kg/ $m^3$ was obtained.

**Example 8:** This example introduces a foam made with a mixture of activated cyclic carbonate and epoxide. In a 250 $cm^3$ HDPE cup, TMPTC (31.40 g, 50.11 wt%, 72.29 mmol, 5CC = 216.86 mmol, 1 eq) was combined with DMACC (6.95 g, 11.09 wt%, 54.21 mmol, 0.25 eq), epoxyde (TMPTE 5.46 g, 8.72 wt%, 54.21 mmol, 0.25 eq) and hydrotalcite (HTC 3.14 g, 10 wt% vs TMPTC) at 30-40 °C (to achieve a homogeneous mixture), then cooled till 25°C. In a glass vial, amine (TREN 13.21 g, 21.09 wt%, 90.36 mmol, 1.25 eq, $NH_2$ = 271.07 mmol) was added. In a second glass vial, catalyst (KOH 1.52 g, 2.43 wt%, 27.11 mmol, 0.13 eq) was dissolved in $H_2O$ (0.98 g, 1.56 wt%, 54.21 mmol, 0.25 eq). Amine and catalyst solution were simultaneously added to the HDPE cup, stirred for 5 sec at 25°C. An exotherm from 25 °C to 123 °C was observed together with a simultaneous foam formation. The foam reached maximum expansion within 1 min and hardened upon cooling. A rigid foam with a density of 132 Kg/ $m^3$ was obtained.

**Example 9:** This example introduces a foam made without catalyst (compound D). In a 250 $cm^3$ HDPE cup, TMPTC (31.40 g, 59.22 wt%, 72.29 mmol, 5CC = 216.86 mmol, 1 eq) was combined with activated cyclic carbonate (DMACC 6.95 g, 13.11 wt%, 54.21 mmol, 0.25 eq) and hydrotalcite (HTC 3.14 g, 10 wt% vs TMPTC) at 30-40 °C (to achieve a homogeneous mixture), then cooled till 25°C. In a glass vial, amine (TREN 10.55 g, 19.90 wt%, 72.29 mmol, 1 eq, $NH_2$ = 216.86 mmol) was measured. In a second glass vial, $H_2O$ (0.98 g, 1.82 wt%, 54.21 mmol, 0.25 eq) was measured. Amine and catalyst solution were simultaneously added to the HDPE cup, stirred for 5 sec at 25°C. An exotherm from 25 °C to 118 °C was observed together with a simultaneous foam formation. The foam reached maximum expansion within 1 min and hardened upon cooling. A rigid foam with a density of 162 Kg/ $m^3$ was obtained.

**Example 10:** This example introduces a foam made with biobased reactants. In a 250 $cm^3$ HDPE cup, GTC (31.40 g, 54.54 wt%, 80.04 mmol, 5CC = 240.12 mmol, 1 eq) was combined with activated cyclic carbonate (DMACC 7.69 g, 13.36 wt%, 60.03 mmol, 0.25 eq;) and hydrotalcite (HTC 3.14 g, 10 wt% vs TMPTC) at 30-40 °C (to achieve a homogeneous mixture), then cooled till 25°C. In a glass vial, amines (TREN 9.42 g, 16.37 wt%, 64.41 mmol, 0.81 eq, $NH_2$ = 193.29 mmol; HMDA 4.81 g, 8.36 wt%, 41.42 mmol, 0.35 eq, $NH_2$ = 82.84 mmol) were measured. In a second glass vial,

catalyst (KOH 0.67 g, 1.17 wt%, 12.01 mmol, 0.05 eq) was dissolved in $H_2O$ (0.43 g, 0.75 wt%, 24.01 mmol, 0.10 eq). Amine and catalyst solution were simultaneously added to the HDPE cup, stirred for 5 sec at 25°C. An exotherm from 25 °C to 120 °C was observed together with a simultaneous foam formation. The foam reached maximum expansion within 1 min and hardened upon cooling. A rigid foam with a density of 97 Kg/ $m^3$ was obtained.

**Example 11:** This example shows a foaming trial of a formulation without the use of compound J (activated cyclic carbonate). In a 250 $cm^3$ HDPE cup, TMPTC (31.40 g, 68.86 wt%, 72.29 mmol, 5CC = 216.86 mmol, 1 eq) was combined with hydrotalcite (HTC 3.14 g, 10 wt% vs TMPTC) at 30-40 °C (to achieve a homogeneous mixture), then cooled till 25°C. In a glass vial, amine (TREN 9.51 g, 20.86 wt%, 54.215 mmol, 0.75 eq, $NH_2$ = 162.60 mmol) was measured. In a second glass vial, catalyst (KOH 0.97 g, 0.02 wt%, 17.35 mmol, 0.08 eq) was dissolved in $H_2O$ (0.58 g, 0.01 wt%, 32.53 mmol, 0.15 eq). Amine and catalyst solution were simultaneously added to the HDPE cup, stirred for 5 sec at 25°C. The temperature of the reaction mixture slowly increased from 25 °C to 100 °C, no foaming was observed (d > 1000 $kg.m^{-3}$). This example evidences the effect of activated cyclic carbonate to get proper foaming.

## Claims

1. A curable isocyanate-free formulation for preparing a polyurethane self-blowing foam, said formulation comprising:

   - at least one multifunctional amine (compound B),
   - water as such or/and a water source,
   - at least one activated cyclic carbonate having at least one cyclic carbonate group which is selected from an exo-vinylene cyclic carbonate or an endo-vinylene cyclic carbonate (compound J),
   - optionally at least one multifunctional cyclic carbonate having at least two terminal cyclic carbonate groups (compound A),
   - optionally at least one catalyst (compound D),
   - optionally an epoxide compound (compound I),
   - optionally a filler,

   wherein water as such and/or water source is present in the formulation in such amounts that the molar ratio of total amount of water including water provided by the water source to cyclic carbonate groups from compound J and/or compound A is between 0.025 and 8.0, preferably between 0.05 and 5.0, more preferably between 0.1 and 4.0, even more preferably between 0.25 and 2.0, and
   wherein compound A is optional in case compound J is a multifunctional activated cyclic carbonate comprising at least two terminal cyclic carbonate groups.

2. Formulation according to claim 1 wherein compound J is a cyclic carbonate having at least one cyclic carbonate group selected from an exo-vinylene cyclic carbonate corresponds to following formula III:

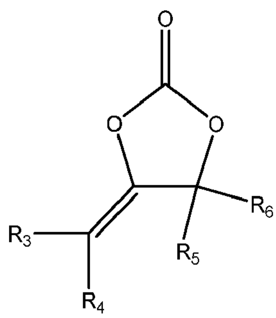

Formula (III)

   wherein

   - $R_3$, $R_4$ independently of one another each denote hydrogen, an allyl, an aryl or a C1 to C20 alkyl chain optionally substituted with an alkene, an allyl, a phenyl, an acrylate, a methacrylate, an acrylamide group, preferably a hydrogen,
   - $R_5$, $R_6$ independently of one another each denote hydrogen, an allyl, an aryl or a C1 to C20 alkyl chain optionally substituted with an alkene, an allyl, a phenyl, an acrylate, a methacrylate, an acrylamide group, or $R_5$ and $R_6$ together form a cycloalkyl chain, preferably a methyl, and
   - Optionally $R_3$, $R_4$, $R_5$ and/or $R_6$ comprise at least one further cyclic carbonate group selected from an endo-vinylene cyclic carbonate and/or exo- vinylene cyclic carbonate group.

**3.** Formulation according to claim 1 wherein compound J is a cyclic carbonate having at least one cyclic carbonate group selected from an endo-vinylene cyclic carbonate corresponds to following formula IV:

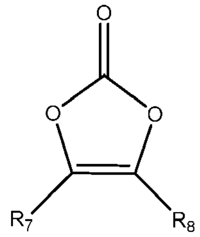

Formula (IV)

wherein
$R_7$, $R_8$ independently of one another each denote hydrogen, an allyl, an aryl or a C1 to C20 alkyl chain optionally substituted with an alkene, an allyl, a phenyl, an acrylate, a methacrylate, an acrylamide group, preferably a hydrogen or methyl group, and optionally $R_7$ and/or $R_8$ comprise at least one further cyclic carbonate group selected from an endo-vinylene cyclic carbonate and/or exo- vinylene cyclic carbonate group.

**4.** Formulation according to any of foregoing claims wherein compound A corresponds to formula (I):

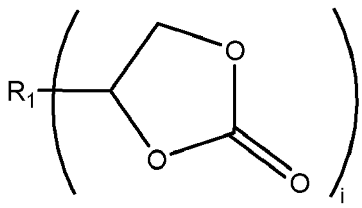

Formula (I)

wherein

- i is an integer higher than or equal to 2, in particular from 2 to 10, more particularly 2 or 3,
- $R_1$ is a carbon bond between the cyclic carbonate rings or is a linear or branched hydrocarbon chain, which may be unsubstituted or substituted and wherein one or several hydrocarbon groups of said hydrocarbon chain may be replaced by a heteroatom, a ketone, a cycloalkyl, a heterocycle, an aryl or a heteroaryl, each of which may be unsubstituted or substituted, said hydrocarbon chain having at least 2 carbon atoms, in particular from 3 to 60 carbon atoms,

**5.** Formulation according to any of foregoing claims wherein compound B corresponds to formula (II):

$R_2$-(NHR')$_j$ Formula (II)

wherein

- j is an integer higher than or equal to 2, in particular from 2 to 6,
- $R_2$ is an aryl or a heteroaryl, each of which may be unsubstituted or substituted, or a linear or branched hydrocarbon chain, which may be unsubstituted or substituted, and wherein one or several hydrocarbon groups of said hydrocarbon chain may be replaced by a heteroatom, a cycloalkyl or a heterocycle, each of which may be unsubstituted or substituted, said hydrocarbon chain having at least 2 carbon atoms, in particular from 2 to 60 carbon atoms, more particularly from 2 to 20 carbon atoms, even more particularly from 2 to 15 carbon atoms, and
- wherein R' each independently may be hydrogen, an alkyl or a cycloalkyl.

**6.** Formulation according to any of foregoing claims wherein compound I corresponds to formula (VIII):

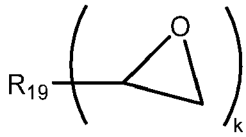

Formula (VIII)

wherein:

- k is an integer, in particular from 1 to 10, more particularly 2 or 3,
- $R_{19}$ is a carbon bond between the epoxide rings when k is from 2, or is a linear or branched hydrocarbon chain, which may be unsubstituted or substituted and wherein one or several hydrocarbon groups of said hydrocarbon chain may be replaced by a heteroatom, a ketone, a cycloalkyl, a heterocycle, an aryl or a heteroaryl, each of which may be unsubstituted or substituted, said hydrocarbon chain having at least 2 carbon atoms, in particular from 3 to 60 carbon atoms.

**7.** Formulation according to any one of the preceding claims wherein compound D is selected from the group consisting of an amine catalyst, an ionic salt or ionic liquid composed of a combination of a cation and an anion, organometallic catalyst and a phosphine-based catalyst and is preferably 1,8-diazabicyclo[5.4.0]undec-7-ene, tetrabutylammonium phenolate, tetrabutyl ammonium hydroxide, potassium carbonate, cesium carbonate or potassium phosphate or hydrogenophosphate, sodium or potassium hydroxide.

**8.** Formulation according to any one of foregoing claims wherein compound A is present in an amount of from 18 to 80 wt%, in particular from 40 to 80 wt%, more in particular from 50 to 80 wt%, the percentage being expressed relative to the total weight of the formulation and wherein compound J is present in an amount of 1 wt% to 40 wt%, in particular from 1 wt% to 30 wt %, more in particular from 2 to 20 wt%, the percentage being expressed relative to the total weight of the formulation.

**9.** Formulation according to any one of the foregoing claims wherein compound B is present in an amount of from 10 to 80 wt%, in particular from 10 to 70 wt%, more in particular from 10 to 50 wt%, the percentage being expressed relative to the total weight of the formulation.

**10.** Formulation according to any one of the foregoing claims wherein the total amount of water including water provided by the water source is of from 0.5 to 20 wt%, the percentage being expressed relative to the total weight of the formulation.

**11.** Formulation according to any one of the preceding claims wherein the molar ratio of total water including the water provided by the water source to cyclic carbonate groups from compound J and/or compound A is between 0.025 and 8.0.

**12.** Formulation according to any one of the foregoing claims wherein the amount of compound I ranges from 0 wt% to 80 wt%, preferably from 1 wt% to 40 wt%, more preferably from 1 wt% to 30 wt %, most preferably from 2 to 20 wt%, the percentage being expressed relative to the total weight of the formulation.

**13.** Process for preparing a polyurethane self-blowing foam comprising the steps of providing a formulation as defined in any one of the preceding claims and letting the ingredients to react at ambient temperature up to 100°C, preferably up to 80°C, more preferably between 20 and 60°C so as to promote the formation of $CO_2$ and form a non-isocyanate polyurethane foam.

**14.** Process for preparing a polyurethane foam which comprises the steps of:

(i) mixing compounds J, A (if present), and optionally in the presence of a filler and/or compound I, so as to form a viscous mixture,
(ii) adding compound B, water or/and a water source in such amounts that the molar ratio of total amount of water including water provided by the water source to cyclic carbonate groups from compound J and/or compound A is between 0.025 and 8.0, preferably between 0.05 and 5.0, more preferably between 0.1 and 4.0, even more preferably between 0.25 and 2.0, optionally in the presence of compound D,
(iii)curing said mixture obtained in step (ii) so as to form a non-isocyanate polyurethane foam,
wherein compounds J, A, B, D and I are as defined in any one of claims 1 to 12.

**15.** Polyurethane foam obtainable by the process as defined in any one of claims 13-14.

**16.** Process for recycling a polyurethane foam as defined in claim 15 by compression molding or extrusion.

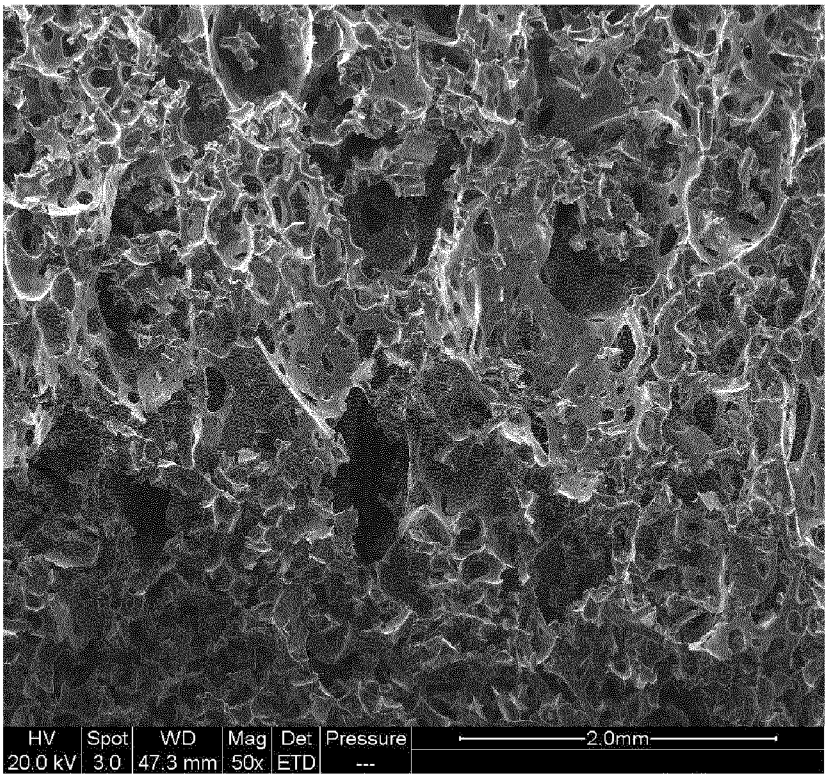


Figure 1a

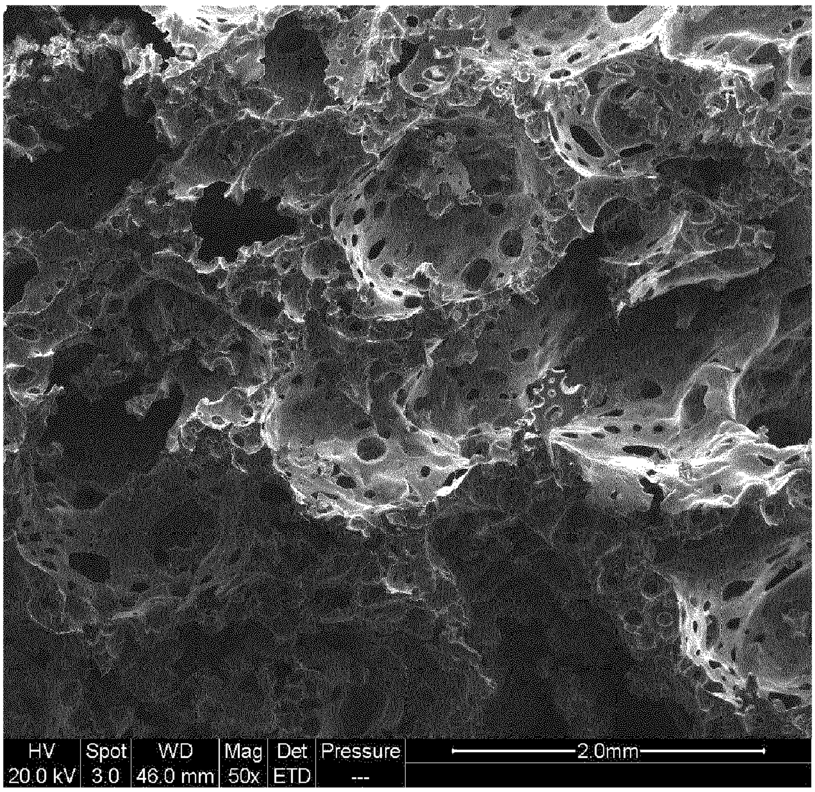


Figure 1b

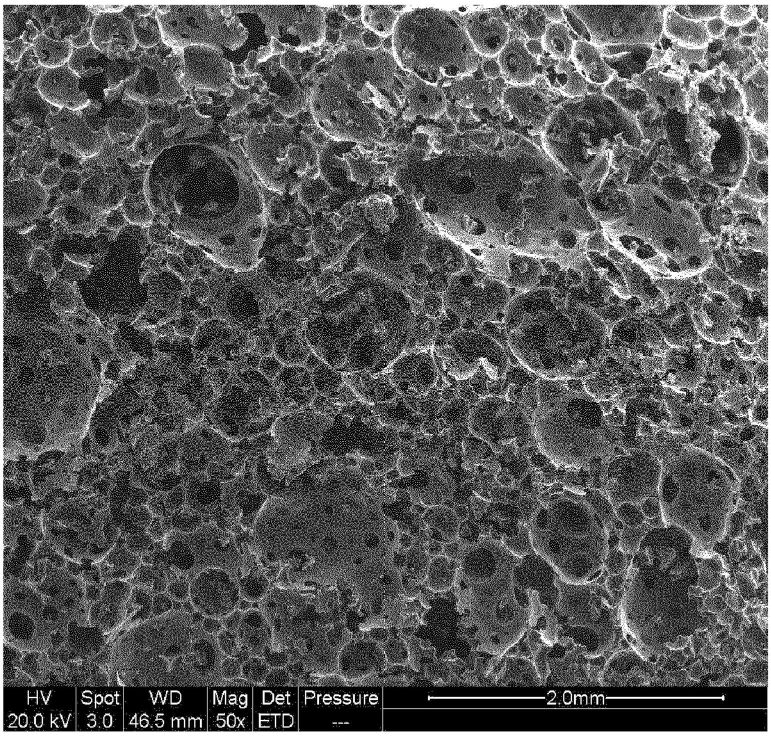


Figure 1c

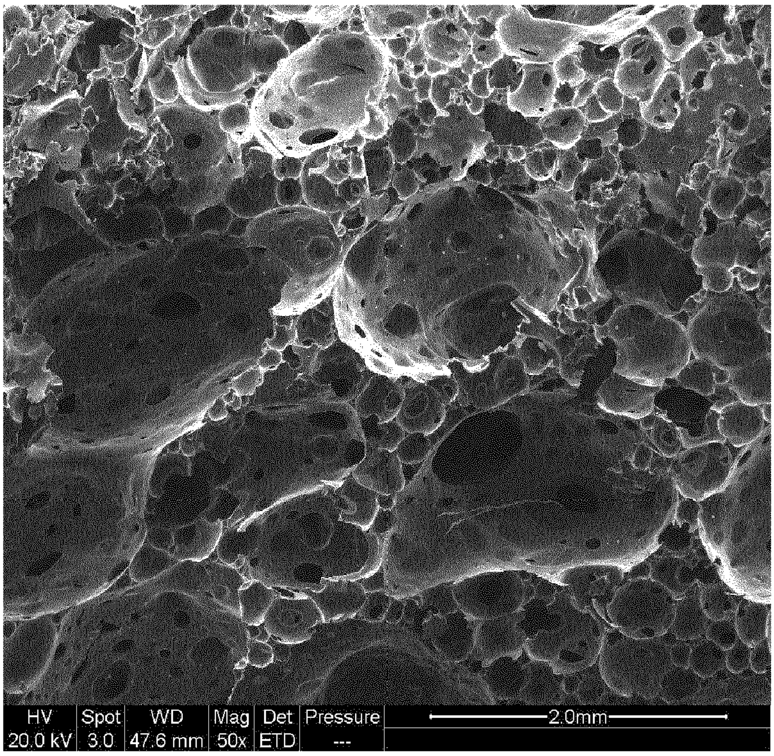


Figure 2

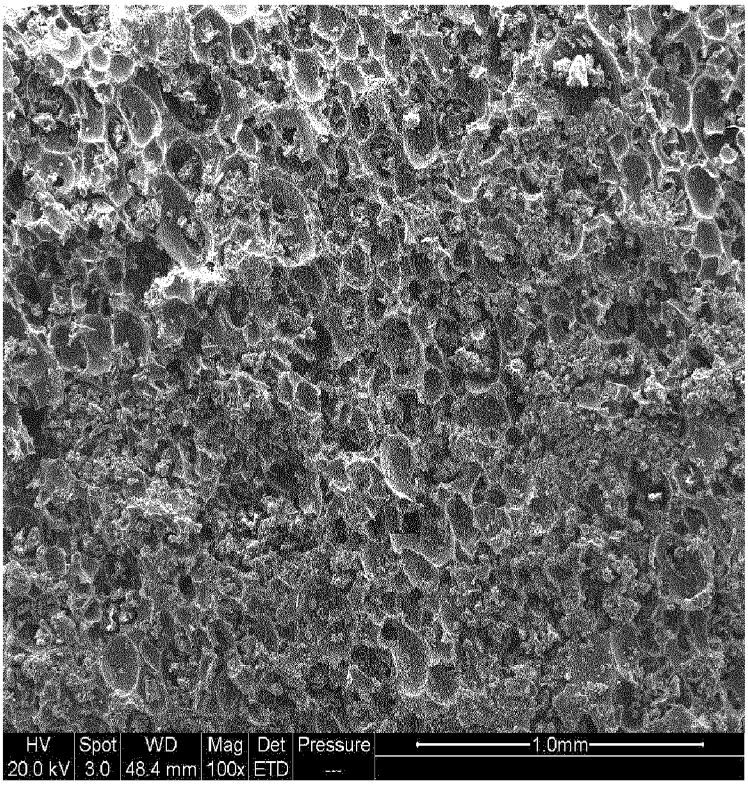


Figure 3

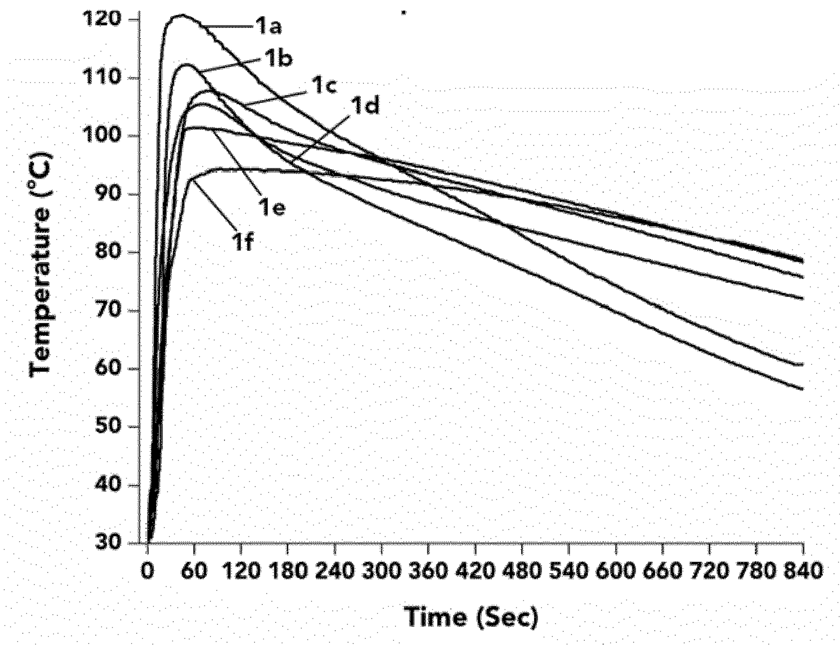


Figure 4

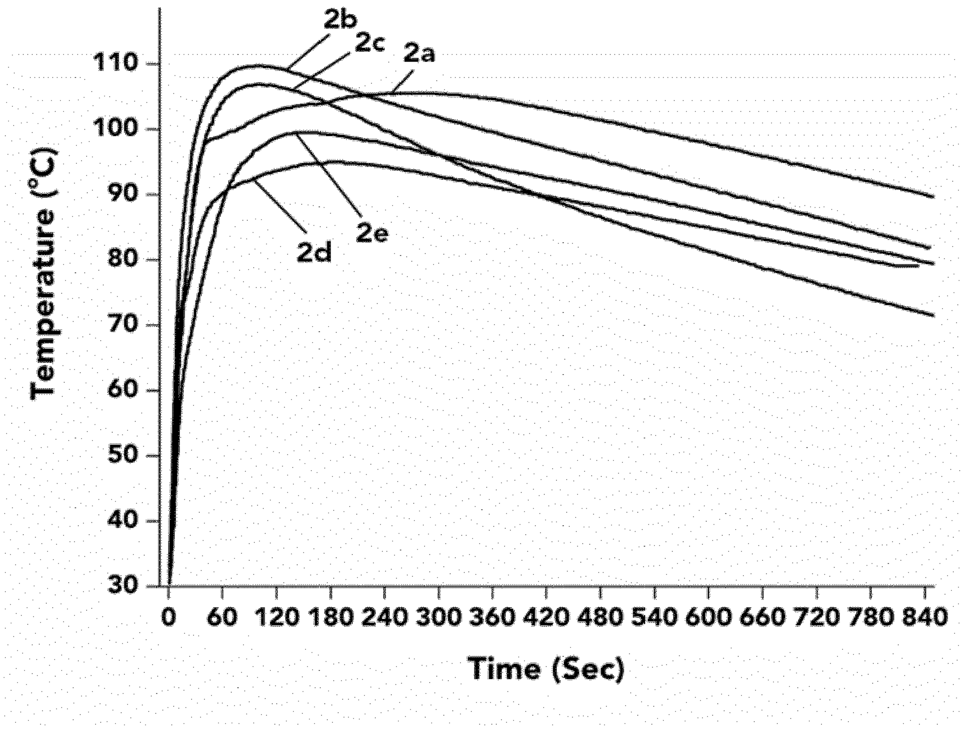
2b
2c
2a
2e
2d
Temperature (°C)
110
100
90
80
70
60
50
40
30
0
60
120
180
240
300
360
420
480
540
600
660
720
780
840
Time (Sec)

Figure 5

Europäisches Patentamt
European Patent Office
Office européen des brevets

# EUROPEAN SEARCH REPORT

Application Number
EP 24 17 1055

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>A | US 2 794 013 A (DRECHSEL ERHART K) 28 May 1957 (1957-05-28)<br>* column 1, line 15 - line 29; claims 1-12 *<br>* column 6 - column 7; examples 8, 9, 15 * | 1-3,5,7,9-11<br>4,6,12-16 | INV.<br>C08G71/04<br>C08J9/02<br>C08J9/08<br>C08J11/04<br>C08K3/22<br>C08K3/26<br><br>ADD.<br>C08G101/00 |
| A | WO 2018/162205 A1 (HENKEL AG & CO KGAA [DE]) 13 September 2018 (2018-09-13)<br>* page 1, line 3 - line 8; claims 1-15 *<br>* page 32; examples 6, 7 *<br>* page 32 - page 33; examples 8-11 *<br>* page 34 - page 35; example 13 * | 1-16 | |
| A,D | WO 2023/104362 A1 (UNIV LIEGE [BE]) 15 June 2023 (2023-06-15)<br>* page 1, line 4 - line 8; claims 1-20 *<br>* page 30, line 1 - page 37, line 11; examples 1-25; tables 1, 2 * | 1-16 | |

| TECHNICAL FIELDS SEARCHED (IPC) |
|---|
| C08G<br>C08J<br>C08K |

The present search report has been drawn up for all claims

2

| Place of search | Date of completion of the search | Examiner |
|---|---|---|
| Munich | 13 September 2024 | Paulus, Florian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................
& : member of the same patent family, corresponding document

EPO FORM 1503 03.82 (P04C01)

# ANNEX TO THE EUROPEAN SEARCH REPORT ON EUROPEAN PATENT APPLICATION NO. EP 24 17 1055

This annex lists the patent family members relating to the patent documents cited in the above-mentioned European search report. The members are as contained in the European Patent Office EDP file on
The European Patent Office is in no way liable for these particulars which are merely given for the purpose of information.

13-09-2024

| Patent document cited in search report | | Publication date | Patent family member(s) | | | Publication date |
|---|---|---|---|---|---|---|
| US 2794013 | A | 28-05-1957 | NONE | | | |
| WO 2018162205 | A1 | 13-09-2018 | EP | 3372624 | A1 | 12-09-2018 |
| | | | TW | 201842061 | A | 01-12-2018 |
| | | | WO | 2018162205 | A1 | 13-09-2018 |
| WO 2023104362 | A1 | 15-06-2023 | EP | 4194481 | A1 | 14-06-2023 |
| | | | EP | 4430105 | A1 | 18-09-2024 |
| | | | US | 2024043647 | A1 | 08-02-2024 |
| | | | WO | 2023104362 | A1 | 15-06-2023 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2023104362 A1
- WO 2021004993 A


### Non-patent literature cited in the description


- *J. Am. Chem. Soc.*, 2024, vol. 146 (1), 988-1000
- **BLAIN et al.** *Green Chemistry*, 2014, vol. 16, 4286
- **TATON et al.** N-Heterocyclic carbenes (NHCs) as organocatalysts and structural components in metal-free polymer synthesis. *Chem. Soc. Rev.*, 2013, vol. 42, 2142